# EUROPEAN PATENT APPLICATION

(11) **EP 4 376 470 A1**
(43) Date of publication of application: **29.05.2024**
(21) Application number: 22845406.2
(22) Date of filing: 21.07.2022
(51) Int. Cl.: H04W 24/02

(54) **SENSING METHOD AND APPARATUS, TERMINAL, AND NETWORK DEVICE**

(30) Priority: 23.07.2021 CN 202110839591
(71) Applicant: Vivo Mobile Communication Co., Ltd., Dongguan, Guangdong 523863 (CN)
(72) Inventor: JIANG, Dajie, Dongguan, Guangdong 523863 (CN); YAO, Jian, Dongguan, Guangdong 523863 (CN); YUAN, Yannan, Dongguan, Guangdong 523863 (CN); WU, Xiaobo, Dongguan, Guangdong 523863 (CN); SUN, Peng, Dongguan, Guangdong 523863 (CN); LI, Jianzhi, Dongguan, Guangdong 523863 (CN); QIN, Fei, Dongguan, Guangdong 523863 (CN)
(74) Representative: Lavoix
(86) International application number: PCT/CN2022/107078
(87) International publication number: WO 2023/001243

(57) **Abstract**

This application discloses a sensing method and apparatus, a terminal, and a network device, and pertains to the field of communication technologies. The sensing method in embodiments of this application includes: determining, by a terminal, a measurement quantity for a sensing signal; and performing, by the terminal, detection on the sensing signal and obtaining a measured value corresponding to the measurement quantity; where the sensing signal is sent by a first network device, and the first network device is a base station.

## Description

### CROSS-REFERENCE TO RELATED APPLICATIONS

This application claims priority to Chinese Patent Application No. 202110839591.1, filed in China on July 23, 2021, which is incorporated herein by reference in its entirety.

### TECHNICAL FIELD

This application pertains to the communication field, and in particular, relates to a sensing method and apparatus, a terminal, and a network device.

### BACKGROUND

Future mobile communication systems such as brand-new beyond 5th generation (Beyond 5th Generation, B5G) systems or 6th generation (6th Generation, 6G) systems not only have communication capabilities but also have sensing capabilities. For sensing capability, one or more devices with sensing capability can transmit and receive radio signals to sense information such as orientation, distance, and speed of a target object, or to perform detection, tracking, identification, and imaging of a target object, event, or environment. In the future, with the deployment of small cell base stations with high frequency band and large bandwidth such as millimeter wave and terahertz in 6G networks, the sensing resolution will be significantly improved compared with centimeter wave, thus enabling 6G networks to provide more detailed sensing services.

The purposes of sensing are mainly divided into two categories. For the first category of purpose, sensing is used to assist communication or enhance communication performance. For example, the base station tracks motion trajectory of a device to provide more accurate beamforming to align with the device. For the other first category of purpose, sensing has no direct relationship with communication, for example, the base station monitors the weather through radio signals, and a mobile phone recognizes gestures of a user through millimeter-wave wireless sensing.

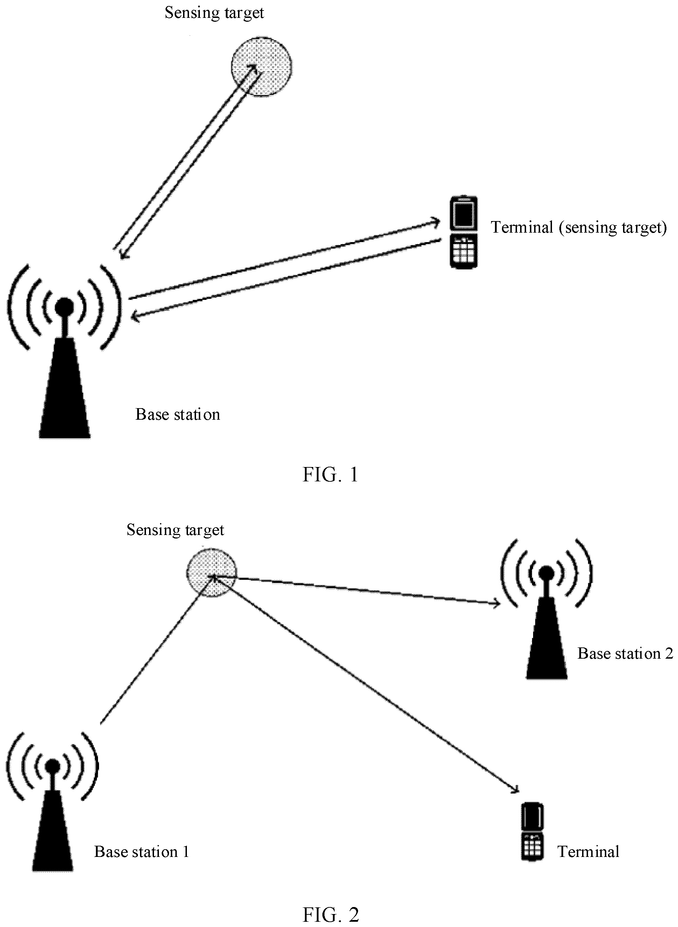

Sensing may be implemented in the following several manners:
(1) Active sensing: The device uses a reflected signal of its own transmitted signal, such as echo, for sensing. A transmitter and a receiver are located in a same location, and can use different antennas to sense information about surrounding environment of the device, as shown in FIG. 1.
(2) Passive sensing: The transmitter and the receiver are located in different locations, and the receiver performs sensing by using a radio signal transmitted by the transmitter. For example, base station 1 senses environmental information between base stations 1 and 2 by receiving a radio signal from base station 2, as shown in FIG. 2.
(3) Interactive sensing: A subject, time, frequency, format, or the like for electromagnetic wave transmission is agreed between a sensor and a target object through information exchange, so as to complete a sensing process.

There is still no related procedure of wireless sensing in related technologies, resulting in an incomplete communication procedure.

### SUMMARY

Embodiments of this application provide a sensing method and apparatus, a terminal, and a network device, which can resolve the problem that communication and sensing cannot be implemented due to lack of a related interaction procedure of wireless sensing.

According to a first aspect, a sensing method is provided, including:
determining, by a terminal, a measurement quantity for a sensing signal; and
performing, by the terminal, detection on the sensing signal and obtaining a measured value corresponding to the measurement quantity; where
the sensing signal is sent by a first network device, and the first network device is a base station.

According to a second aspect, a sensing apparatus is provided, applied to a terminal and including:
a first determining module, configured to determine a measurement quantity for a sensing signal; and
a first obtaining module, configured to perform detection on the sensing signal and obtain a measured value corresponding to the measurement quantity; where
the sensing signal is sent by a first network device, and the first network device is a base station.

According to a third aspect, a sensing method is provided, including:
sending, by a first network device, a sensing signal to a terminal, so that the terminal performs detection on the sensing signal and obtains a measured value corresponding to a measurement quantity for the sensing signal; where
the first network device is a base station.

According to a fourth aspect, a sensing apparatus is provided, applied to a first network device and including:
a first transmitting module, configured to send a sensing signal to a terminal, so that the terminal performs detection on the sensing signal and obtains a measured value corresponding to a measurement quantity for the sensing signal; where
the first network device is a base station.

According to a fifth aspect, a sensing method is provided, including:
sending, by a second network device, first sensing information to a terminal or a first network device; where
the first sensing information includes at least one of a first sensing requirement, configuration information for a sensing signal, and index information of a sensing signal that needs to be measured by the terminal; and
the first network device is a base station.

According to a sixth aspect, a sensing apparatus is provided, applied to a second network device and including:
a second transmitting module, configured to send first sensing information to a terminal or a first network device; where
the first sensing information includes at least one of a first sensing requirement, configuration information for a sensing signal, and index information of a sensing signal that needs to be measured by the terminal; and
the first network device is a base station.

According to a seventh aspect, a terminal is provided, where the terminal includes a processor, a memory, and a program or instructions stored in the memory and capable of running on the processor, and when the program or the instructions are executed by the processor, the steps of the method according to the first aspect are implemented.

According to an eighth aspect, a terminal is provided, including a processor and a communication interface, where the communication interface is configured to determine a measurement quantity for a sensing signal, perform detection on the sensing signal, and obtain a measured value corresponding to the measurement quantity; and
the sensing signal is sent by a first network device.

According to a ninth aspect, a network device is provided, where the network device includes a processor, a memory, and a program or instructions stored in the memory and capable of running on the processor, and when the program or the instructions are executed by the processor, the steps of the method according to the third aspect or the fifth aspect are implemented.

According to a tenth aspect, a network device is provided, where the network device is a first network device and includes a processor and a communication interface, where the communication interface is configured to send a sensing signal to a terminal, so that the terminal performs detection on the sensing signal and obtains a measured value corresponding to a measurement quantity for the sensing signal.

According to an eleventh aspect, a network device is provided, where the network device is a second network device and includes a processor and a communication interface, where the communication interface is configured to send first sensing information to a terminal or a first network device; where
the first sensing information includes at least one of a first sensing requirement, configuration information for a sensing signal, and index information of a sensing signal that needs to be measured by the terminal.

According to a twelfth aspect, a readable storage medium is provided, where a program or instructions are stored in the readable storage medium, and when the program or the instructions are executed by a processor, the steps of the method according to the first aspect, the third aspect, or the fifth aspect are implemented.

According to a thirteenth aspect, a chip is provided, where the chip includes a processor and a communication interface, the communication interface is coupled to the processor, and the processor is configured to run a program or instructions to implement the method according to the first aspect, the third aspect, or the fifth aspect.

According to a fourteenth aspect, a computer program/program product is provided, where the computer program/program product is stored in a storage medium, and the program/program product is executed by at least one processor to implement the steps of the method according to the first aspect, the third aspect, or the fifth aspect.

In the embodiments of this application, detection is performed on a received sensing signal based on a measurement quantity for the sensing signal, to obtain a measured value corresponding to the measurement quantity. In this way, the network sensing procedure is improved and the network can implement sensing smoothly.

### BRIEF DESCRIPTION OF DRAWINGS

FIG. 1 is a schematic diagram of active sensing;
FIG. 2 is a schematic diagram of active sensing;
FIG. 3 is a schematic diagram of integrated waveform classification for sensing and communication;
FIG. 4 is a first schematic flowchart of a sensing method according to an embodiment of this application;
FIG. 5 is a schematic diagram of a network element involved in specific application case 1;
FIG. 6 is a first schematic diagram of modules of a sensing apparatus according to an embodiment of this application;
FIG. 7 is a structural block diagram of a terminal according to an embodiment of this application;
FIG. 8 is a second schematic flowchart of a sensing method according to an embodiment of this application;
FIG. 9 is a second schematic diagram of modules of a sensing apparatus according to an embodiment of this application;
FIG. 10 is a structural block diagram of a network device according to an embodiment of this application;
FIG. 11 is a third schematic flowchart of a sensing method according to an embodiment of this application;
FIG. 12 is a third schematic diagram of modules of a sensing apparatus according to an embodiment of this application; and
FIG. 13 is a structural block diagram of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, a first object may be one or multiple. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

The related technologies involved in this application are described as follows:

The functions and applications of wireless sensing are shown in Table 1:

**Table 1. Functions and applications of wireless sensing**

| Type of wireless sensing | Sensing function | Application |
|---|---|---|
| Large-scale macroscopic sensing | Weather, air quality, and the like | Meteorological, agricultural, and living services |
| | Traffic flow (intersection) and crowd flow (subway entrance) | Smart city, intelligent transportation, and business services |
| | Animal activities, migration, or the like | Animal husbandry, ecological environment protection, and the like |
| | Target tracking, ranging, speed measurement, contour, and the like | Many application scenarios of traditional radars |
| | Three-dimensional map construction | Intelligent driving, navigation and smart city |
| Short-range refined sensing | Action posture recognition | Intelligent interaction of smart phones, games and smart home |
| | Heartbeat/breathing or the like | Health care and medical care |
| | Imaging, material detection, or the like | Security, industry, and the like |

The sensing functions or other sensing requirements in table 1 can be implemented by sending sensing signals and receiving/performing detection on the sensing signals. Devices sending a sensing signal and receiving/performing detection on the sensing signal may be a same device or different devices.

The communication-sensing integration design is feasible from the following four aspects:
the communication system and the sensing system are both based on the electromagnetic wave theory, and information obtaining and transmission are completed by transmitting and receiving electromagnetic waves;
both the communication system and the sensing system have structures of antenna, transmitter, receiver, and signal processor, and there is great overlap in hardware resources;
with the development of technologies, there is increasing overlap between the communication system and the sensing system in the working frequency band; and
there are similarities in key technologies such as signal modulation, reception detection, and waveform design.

Radio interfaces in B5G systems or 6G systems are designed to support both radio communication signals and radio sensing signals. Integrated design of communication and sensing functions is implemented by means of communication-sensing integration such asjoint design for signals and/or hardware sharing, so as to have sensing capability or provide sensing services while transmitting information.

Communication-sensing integration includes the following advantages:
lower costs;
smaller device size;
lower device power consumption;
higher spectrum efficiency; and
lower interference between communication and sensing to implement higher system performance.

At present, the category of communication-sensing integration is not clearly defined, and the communication-sensing integration in its broad sense includes the following several types:
a same network provides communication services and sensing services;
a same terminal provides communication services and sensing services;
a same spectrum provides communication services and sensing services; and
the integrated communication-sensing services are completed in a same radio transmission, that is, joint design for communication signal and sensing signal.

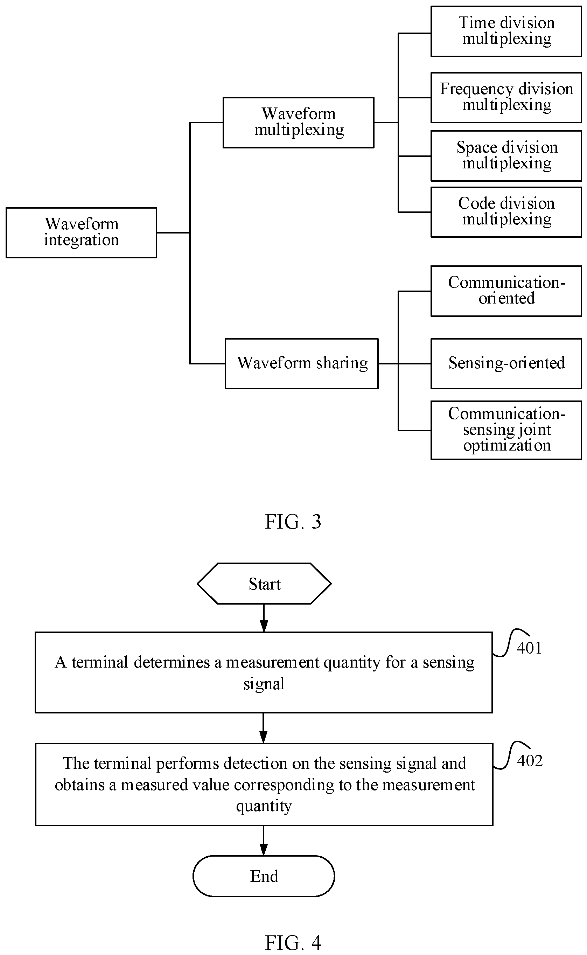

A schematic diagram of waveform integration classification for sensing and communication is shown in FIG. 3.

With reference to the accompanying drawings, the following describes in detail, by using some embodiments and application scenarios thereof, a sensing method and apparatus, a terminal, and a network device provided in the embodiments of this application.

As shown in FIG. 4, an embodiment of this application provides a sensing method including:
Step 401: A terminal determines a measurement quantity for a sensing signal.

It should be noted that the sensing signal mentioned in this embodiment of this application indicates a sensing signal that needs to be measured by the terminal, for example, may be one or several sensing signals.

Step 402: The terminal performs detection on the sensing signal and obtains a measured value corresponding to the measurement quantity.

The sensing signal is sent by a first network device.

It should be noted that this embodiment of this application mainly describes: a base station sends a sensing signal, and a terminal receives the sensing signal for detection to obtain a measured value. That is, the first network device mentioned in this embodiment of this application refers to a base station located on the access network side; and a second network device mentioned in this embodiment of this application may be an access and mobility management function (Access and Mobility Management Function, AMF) entity on the core network side. The second network device may alternatively be a sensing function entity, for example, a sensing network function entity or a sensing network element, where the sensing function entity may be located on the core network side or the access network side. The second network device may alternatively be other functional entities on the core network side

It should be noted that the terminal can determine the measurement quantity for the sensing signal in at least one of the following manners:
A11: Receiving first indication information sent by the first network device or the second network device, where the first indication information is used to indicate a measurement quantity for the sensing signal that needs to be measured by the terminal.

That is, in this case, the measurement quantity for the sensing signal may be sent by the base station to the terminal, or sent by the AMF or the sensing function entity to the terminal.

A12: Based on a first sensing requirement, determining a measurement quantity for a sensing signal that needs to be measured by the terminal.

That is, in this case, the measurement quantity for the sensing signal is determined by the terminal itself based on the first sensing requirement. Alternatively, the first sensing requirement may be sent to the terminal by the first network device or the second network device; or may be generated by the terminal.

It should be further noted that to receive the sensing signal accurately, the terminal needs to determine the configuration information for the sensing signal before receiving the sensing signal.

This embodiment of this application provides two sending modes for the sensing signal, and the following describes in detail how the terminal determines the configuration information for the sensing signal in these two modes.

Mode 1: The base station needs to send the sensing signal based on the configuration information for the sensing signal

It should be noted that in this case, the terminal determines an implementation of the configuration information for the sensing signal, including at least one of the following:
B11: the terminal receives first configuration information for the sensing signal, where the first configuration information is sent by the first network device;
B12: the terminal receives second configuration information for the sensing signal, where the second configuration information is sent by a second network device; and
B13: the terminal determines, based on a first sensing requirement, third configuration information for the sensing signal.

It should be noted herein that the configuration information for the sensing signal may be informed only by the base station to the terminal; in this case, all configurations of the sensing signal are included in the first configuration information. The configuration information for the sensing signal may alternatively be informed to the terminal only by the AMF entity or the sensing function entity; in this case, all configurations of the sensing signal are included in the second configuration information. The configuration information for the sensing signal may alternatively be determined only by the terminal itself; in this case, all configurations of the sensing signal are included in the third configuration information. The configuration information for the sensing signal may alternatively be determined by at least two of the base station, the terminal, and the AMF entity (or the sensing function entity), that is, each device determines only part of parameters or part of configuration information for the sensing signal.

For example, the configuration information for the sensing signal includes three configuration parameters A, B, and C. In a case that the configuration information for the sensing signal is informed only by the base station to the terminal, the first configuration information includes three configuration parameters A, B, and C of the sensing signal. In a case that the configuration information for the sensing signal is informed only by the AMF entity or the sensing function entity to the terminal, the second configuration information contains three configuration parameters of the sensing signal, namely, A, B, and C. In a case that the configuration information for the sensing signal is determined only by the terminal itself, the third configuration information contains three configuration parameters of the sensing signal: A, B, and C. In a case that the configuration information for the sensing signal is informed by the base station and the AMF to the terminal, the first configuration information contains one part of the three configuration parameters A, B, and C of the sensing signal (for example, the first configuration information includes A), and the second configuration information contains the other part of the three configuration parameters A, B, and C of the sensing signal (for example, the first configuration information includes B and C). As derived by analogy, other cases are similar and thus not described one by one herein.

In this case, using the terminal, the base station, and the sensing function entity as examples, the process before the terminal performs detection on the sensing signal is described as follows:
Case 1: The terminal receives a first sensing requirement sent by the sensing function entity, and the terminal determines the configuration information for the sensing signal based on the first sensing requirement. The base station determines the configuration information for the sensing signal. The terminal receives first indication information sent by the sensing function entity, where the first indication information is used to indicate the measurement quantity for the sensing signal that needs to be measured by the terminal. The base station sends the sensing signal based on the configuration information for the sensing signal, and the terminal receives the sensing signal based on the configuration information for the sensing signal.

It should be noted here that the manner in which the base station determines the configuration information for the sensing signal includes one of the following:
B111. the first network device receives second configuration information that is for a sensing signal and that is sent by the second network device; and
B112. the first network device determines, based on third information, first configuration information for the sensing signal; where
the third information includes at least one of the following:
   B1121. first sensing requirement;
   B1122. first recommendation information for the configuration information, where the first recommendation information is determined by the second network device based on the first sensing requirement; and
   B1123. second recommendation information for the configuration information, where the second recommendation information is sent by the terminal to the first network device.

Case 2: The terminal receives a first sensing requirement sent by the base station, and the terminal determines the configuration information for the sensing signal based on the first sensing requirement. The base station receives the configuration information for the sensing signal sent by the sensing function entity. The terminal receives first indication information sent by the base station, where the first indication information is used to indicate the measurement quantity for the sensing signal that needs to be measured by the terminal. The base station sends the sensing signal based on the configuration information for the sensing signal, and the terminal receives the sensing signal based on the configuration information for the sensing signal.

Specifically, the manner in which the sensing function entity determines the configuration information for the sensing signal includes:
determining the configuration information for the sensing signal based on fifth information; where
the fifth information includes at least one of the following:

B121. First sensing requirement.

B122. Sensing capability information sent by the first network device.

For example, the sensing capability information may be a measurement quantity related capability supported by the first network device, for example, what kinds of measurement quantities supported by the terminal to obtain. For another example, the sensing capability information may be format information of the sensing signal that the first network device can send, for example, the maximum bandwidth of the sensing signal that the first network device can send is 100MHz; and the sensing capability information can be reported by the first network device to the second network device.

B123. Sensing capability information sent by the terminal.

For example, the sensing capability information may be a capability related to a measurement quantity supported by the terminal, for example, which kinds of measurement quantities supported by the terminal to obtain. For another example, the sensing capability may be the format information of the sensing signal supported by the terminal for detection, for example, the maximum bandwidth of the sensing signal supported by the terminal for detection is 100MHz. The sensing capability can be reported by the terminal to the second network device.

B124. Third recommendation information for the configuration information, where the third recommendation information is determined by the first network device based on the first sensing requirement and is sent to the second network device.

B125. Fourth recommendation information for the configuration information, where the fourth recommendation information is determined by the terminal based on the first sensing requirement and is sent to the second network device.

B126. Fifth recommendation information for the configuration information, where the fifth recommendation information is sent by the terminal to the second network device.

Mode 2: The base station broadcasts the sensing signal, and the terminal receives only the sensing signal that needs to be measured.

It should be noted that in this case, the terminal determines an implementation of the configuration information for the sensing signal, including:
obtaining, by the terminal, configuration information that is for the sensing signal and that is sent by the first network device using broadcast signaling.

It should be noted that in this case, because the base station broadcasts the sensing signal, the configuration information for the sensing signal is also broadcast before the sensing signal is broadcast. In this case, the terminal needs to know which sensing signal that the terminal needs to measure, so as to accurately receive a sensing signal based on the configuration information for the sensing signal. Therefore, in another embodiment of the application, before the terminal obtains the configuration information for the sensing signal sent by the first network device through broadcast signaling, the method further includes:
determining, by the terminal based on first information, a to-be-measured sensing signal; where
the first information includes at least one of the following:
   B21. First sensing requirement sent by a second network device.

It should be noted that, in this case, the first sensing requirement is associated with the sensing signal to be measured by the terminal, that is, the first sensing requirement corresponds to the sensing signal to be measured by the terminal, and the terminal can directly determine, based on the first sensing requirement, the to-be-measured sensing signal.

B22. Index information that is of the sensing signal to be measured by the terminal and that is sent by the second network device.

The sensing signal herein indicates a common sensing signal.

It should be noted that because the base station sends a plurality of common sensing signals, the sensing signal index information is used to indicate which one or several specific common sensing signals. For example, when the sensing signal index information is 1, the terminal needs to measure a common sensing signal with the number or index of 1.

In this case, using the terminal, the base station, and the sensing function entity as examples, the process before the terminal performs detection on the sensing signal is described as follows:
Case 1: The terminal receives a first sensing requirement sent by the sensing function entity, determines a to-be-measured sensing signal based on the first sensing requirement, and receives configuration information for the to-be-measured sensing signal broadcast by the base station. The base station determines the configuration information for the sensing signal based on the first sensing requirement. The terminal receives first indication information sent by the sensing function entity, where the first indication information is used to indicate the measurement quantity for the sensing signal that needs to be measured by the terminal. The base station sends a sensing signal based on the configuration information for the sensing signal; and the terminal receives the sensing signal based on the to-be-measured sensing signal and the configuration information for the sensing signal.
Case 2: The terminal receives a first sensing requirement sent by the sensing function entity and index information of the sensing signal to be measured by the terminal, and determines a to-be-measured sensing signal, and the terminal receives configuration information for the to-be-measured sensing signal broadcast by the base station. The base station determines configuration information for the sensing signal based on the first sensing requirement; and the terminal receives first indication information sent by the base station, where the first indication information is used to indicate the measurement quantity for the sensing signal that needs to be measured by the terminal. The base station sends a sensing signal based on the configuration information for the sensing signal; and the terminal receives the sensing signal based on the to-be-measured sensing signal and the configuration information for the sensing signal.

It should be further noted that before sending information to the terminal, both the base station and the core network need to determine a terminal that can receive information. Specifically, the base station and the core network determine, based on one of the following information, a terminal that is to receive information (that is, the terminal that participates in sensing):
B31. Information about whether a terminal accesses the first network device.

The information refers to whether the terminal can access an associated base station.

B32. Sensing capability reported by a terminal.

For example, the sensing capability may be a measurement quantity related capability supported by the terminal, for example, which kinds of measurement quantities supported by the terminal to obtain. For another example, the sensing capability may be the format information of the sensing signal supported by the terminal for detection, for example, the maximum bandwidth of the sensing signal supported by the terminal for detection is 100MHz. The sensing capability can be reported by the terminal to the first network device or to the second network device.

B33. Other priori information, where the other priori information includes terminal location information.

For example, for 3-dimensional (3-dimension, 3D) environment mapping (environment mapping), only user equipments (User Equipment, UE) within a range of the environment to be reconstructed needs to participate.

It should be further noted herein that after determining of UE participating in the sensing, the base station can further sort UEs based on related information of the sensing measurement signal reported by the UE, such as measurement quantities of received signal strength indicator (Received Signal Strength Indicator, RSSI), reference signal received power (Reference Signal Receiving Power, RSRP), and mobility.

It should be further noted that the first sensing requirement mentioned in this embodiment of this application is associated with at least one of the following:
C11. Sensing object

Optionally, the sensing object includes, but is not limited to, at least one of object, device, people, animal, building, automobile, environment, air quality, humidity, temperature, and a specific area (that is, an area).

### C12. Sensing quantity

Optionally, the sensing quantity includes, but is not limited to, at least one of position of a sensing object, distance of the sensing object, moving speed of the sensing object, imaging of the sensing object, motion trajectory of the sensing object, texture analysis of the sensing object, and material analysis.

### C13. Sensing indicator

Optionally, the sensing indicator includes, but is not limited to, at least one of sensing accuracy, sensing error, sensing range, sensing delay, detection probability and false alarm probability.

Specifically, the sensing accuracy includes: distance resolution, imaging resolution, moving speed resolution, or angular resolution. The sensing error includes: distance error, imaging error, or moving speed error.

It should be noted that the first sensing requirement is associated with the sensing object and the sensing quantity, to generate the following sensing requirement:
Characteristic information of a target object: existence, distance, position, speed, acceleration, material, shape, category, radar cross section (Radar Cross Section, RCS), polarization scattering characteristics, and the like of the target obj ect.

Related information of a target event: fall detection, intrusion detection, quantity statistics, indoor positioning, gesture recognition, lip recognition, gait recognition, expression recognition, respiratory monitoring, heart rate monitoring, and the like.

Related information of the target environment: humidity, brightness, temperature and humidity, atmospheric pressure, air quality, weather conditions, topography, building/vegetation distribution, population statistics, crowd density, vehicle density, and the like.

Optionally, the first sensing requirement can also be associated with the configuration information for the sensing signal or the measurement quantity for the sensing signal.

As shown in table 2, the first sensing requirement can be divided into several sensing types. and each sensing type is associated with at least one of the configuration information for the sensing signal and the measurement quantity for the sensing signal. The association relationship can be specified in a protocol or notified through signaling between different devices. If one device has a sensing requirement, for example, the sensing requirement requires another device (such as a terminal) to measure and feed back a measurement quantity related to environmental reconstruction, the sensing requirement is sensing index 1 in this case. Optionally, the terminal device obtains the sensing index 1 for the received signaling sent by other devices, and determines the configuration information for the sensing signal and/or the measurement quantity for the sensing signal according to the sensing index 1 and the table 2.

**Table 2. Relationship between sensing types and configuration information and measurement quantities for sensing signals**

| Sensing index | Sensing type | Configuration information for sensing signal | Measurement quantity for sensing signal |
|---|---|---|---|
| 1 | Environmental reconstruction | Single-carrier frequency-division multiple access (Single-carrier Frequency-Division Multiple Access, SC-FDMA) waveform; and corresponding parameters and time-frequency resources, and so on | Target RCS information and received signal strength indicator |
| 2 | Weather monitoring | SC-FDMA and corresponding parameters and time-frequency resources, and so on | Channel State Information (Channel State Information, CSI), received signal strength indicator, and so on |
| 3 | PM2.5 monitoring | Orthogonal frequency division multiplex (Orthogonal frequency division multiplex, OFDM) and corresponding parameters and time-frequency resources, and so on | Channel state information CSI and received signal strength indicator |
| 4 | Traffic monitoring | Orthogonal time frequency space (Orthogonal Time Frequency Space, OTFS) and corresponding parameters and time-frequency resources, and so on | Doppler shift |
| 5 | Crowd flow monitoring | OFDM and corresponding parameters and time-frequency resources, and so on | Channel state information CSI |

Optionally, in another embodiment of the application, after the terminal obtains the measured value corresponding to the measurement quantity, the method further includes any one of the following:
D11. The terminal sends the measurement quantity and the measured value corresponding to the measurement quantity to the first network device or a second network device.

Optionally, when the measurement quantity and the measured value corresponding to the measurement quantity are sent to the first network device, the first network device can send the measurement quantity and the measured value corresponding to the measurement quantity to the second network device, and the second network device can convert a sensing result and send the sensing result to the terminal (corresponding to a case that the terminal initiates the sensing service) or a third network device (corresponding to a case that other devices than the terminal initiate the sensing service). Specifically, the third network device may be other base stations, that is, a base station other than measuring the sensing signal, other network elements in the core network, such as an application server (this case corresponds to a case that a third-party application initiates a sensing service) or a network management system.

Optionally, in a case that the measurement quantity and the measured value corresponding to the measurement quantity are sent to the first network device, the first network device can also convert the measurement quantity and the measured value corresponding to the measurement quantity into a sensing result and send the sensing result to the second network device. The second network device directly sends the sensing result to the terminal or the third network device.

Optionally, in a case that the measurement quantity and the measured value corresponding to the measurement quantity are sent to the second network device, the second network device performs conversion on a sensing result and sends the sensing result to the terminal or the third network device.

Optionally, when the terminal is an initiator of the sensing service, the terminal can alternatively receive a sensing result from the second network device side.

D12. The terminal determines a sensing result based on the measurement quantity and the measured value corresponding to the measurement quantity.

Optionally, then the terminal may send the sensing result to the first network device.

Optionally, the measurement quantity and the measured value corresponding to the measurement quantity are a sensing result.

In a case that the terminal sends the sensing result to the first network device, the first network device sends the sensing result to the second network device, and the second network device sends the sensing result to the third network device.

From the perspective of an initiator of the sensing service, actions that the terminal needs to perform after obtaining the measured value are illustrated as follows:
In a case that a third-party application initiates a sensing service, optionally, after obtaining the measured value, the terminal may send the measurement quantity and a measured value corresponding to the measurement quantity to the base station, and then the base station sends the measurement quantity and the measured value corresponding to the measurement quantity to the sensing function entity; and the sensing function entity determines a sensing result based on the measured value and sends it to the application server, and the application server sends the sensing result to the third-party application. Optionally, after obtaining the measured value, the terminal may send the measurement quantity and a measured value corresponding to the measurement quantity to the base station, and the base station determines a sensing result based on the measured value and sends it to the sensing function entity; and the sensing function entity sends the sensing result to the application server, and the application server sends the sensing result to the third-party application. Optionally, after obtaining the measured value, the terminal may determine a sensing result based on the measurement quantity and the measured value corresponding to the measurement quantity and send the sensing result to the base station, and the base station forwards the sensing result to the sensing function entity; and the sensing function entity sends the sensing result to the application server, and the application server sends the sensing result to the third-party application.

In a case that the AMF initiates a sensing service, optionally, after obtaining the measured value, the terminal may send the measurement quantity and a measured value corresponding to the measurement quantity to the base station, and the base station then sends the measurement quantity and the measured value corresponding to the measurement quantity to the AMF; and the AMF determines a sensing result based on the measured value. Optionally, after obtaining the measured value, the terminal may send the measurement quantity and a measured value corresponding to the measurement quantity to the base station, and the base station determines a sensing result based on the measured value and sends it to the AMF. Optionally, after obtaining the measured value, the terminal may determine a sensing result based on the measurement quantity and the measured value corresponding to the measurement quantity and send the sensing result to the base station, and the base station forwards the sensing result to the AMF.

In a case that the terminal initiates a sensing service, optionally, after obtaining the measured value, the terminal may send the measurement quantity and a measured value corresponding to the measurement quantity to the base station, and then the base station sends the measurement quantity and the measured value corresponding to the measurement quantity to the AMF; and the AMF determines a sensing result based on the measured value, and then sends the sensing result to the terminal using non-access stratum (Non-Access Stratum, NAS) signaling. Optionally, after obtaining the measured value, the terminal may send the measurement quantity and a measured value corresponding to the measurement quantity to the base station, and the base station determines a sensing result based on the measured value and sends it to the AMF; and the AMF determines a sensing result based on the measured value, and then sends the sensing result to the terminal using NAS signaling. Optionally, after obtaining the measured value, the terminal may determine a sensing result based on the measurement quantity and the measured value corresponding to the measurement quantity.

It should be further noted that the sensing result mentioned in this embodiment of this application includes at least one of the following:
E11: Characteristic information of a target object

For example, the characteristic information may be: existence, distance, position, speed, acceleration, material, shape, category, Radar cross section RCS, polarization scattering characteristics, and the like of the target object.

E12: Related information of a target event

For example, related information of a target time may be fall detection, intrusion detection, quantity statistics, indoor positioning, gesture recognition, lip recognition, gait recognition, expression recognition, respiratory monitoring, heart rate monitoring, and the like.

E13: Related information of a target environment

For example, related information of the target environment may be humidity, brightness, temperature and humidity, atmospheric pressure, air quality, weather conditions, topography, building/vegetation distribution, population statistics, crowd density, vehicle density, and the like.

Optionally, the sensing result may further include at least one of the following:
E101. location of the target object;
E102. distance of the target object;
E103. distance of the target object;
E104. detection result of the target object;
E105. tracking result of the target object;
E106. identification result of the target object;
E107. imaging result of the target object;
E108. humidity of the target environment;
E109. temperature of the target environment; and
E110. air quality of the target environment.

The sensing function entity mentioned in the embodiment of the application meets at least one of the following requirements:
F101. managing overall coordination and scheduling of resources required by sensing;
F102. calculating a sensing result;
F103. estimating sensing accuracy;
F104. verifying a sensing result;
F105. supporting an immediate sensing request;
F106. supporting a delayed sensing request;
F107. supporting a periodic or event-triggered sensing request;
F108. supporting canceling of a periodic or triggered sensing behavior; and
F109. corresponding to at least one AMF entity.

That is, a plurality of sensing function entities may correspond to one AMF entity, or one sensing function entity may be connected to a plurality of AMF entities correspondingly; and

F110. determining a sensing mode based on second information; where
the second information includes at least one of type of a sensing client, sensing quality of service (Quality of Service, QoS), sensing capability of the terminal, and sensing capability of the first network device.

The sensing mode is associated with an entity that receives and sends the sensing signal, specifically, the relationship between an entity corresponding to the sensing mode and signal reception/transmission includes at least one of the following:
F1101: The first network node sends a sensing signal, and the second network node receives the sensing signal.

This case means that a base station A sends a sensing signal and a base station B receives the sensing signal.

F1102: The first network node sends and receives a sensing signal.

This case means that the base station A sends a sensing signal and the base station A receives the sensing signal.

F1103: The first network node sends a sensing signal, and a terminal device associated with the first network node receives the sensing signal.

This case means that the base station A sends a sensing signal and the terminal receives the sensing signal.

F1104: The first terminal device sends a sensing signal, and the second terminal device receives the sensing signal.

This case means that a terminal A sends a sensing signal and a terminal B receives the sensing signal.

F1105: The first terminal device sends and receives a sensing signal.

This case means that the terminal A sends a sensing signal and the terminal A receives the sensing signal.

F1106: The first terminal device sends a sensing signal, and the first network node receives the sensing signal.

This case means that the terminal A sends a sensing signal and the base station A receives the sensing signal.

It should be further noted that the sensing function entity may be located on the core network side or the base station side. If the sensing function entity is located at the base station side, all the processes of sensing services are completed in the radio access network (Radio Access Network, RAN) (in a case of triggering a sensing service by the base station or UE). The sensing function entity may be a separate function entity/physical entity, or deployed in a general server of the core network as one of the functions of the core network, or deployed at the base station side as one of the functions of the base station. The sensing function entity directly interacts a sensing request and a sensing result with the application server (for example, the application server of the operator), or the sensing function entity interacts a sensing request and a sensing result with the AMF, and the AMF may directly or indirectly interacts a sensing request and a sensing result with the application server (such as an application server of a third party)(through a gateway mobile location centre (Gateway Mobile Location Centre, GMLC) and a network exposure function (Network Exposure Function, NEF)).

It should be noted that the configuration information for the sensing signal in this embodiment of this application includes at least one of the following parameters:
H101. Waveform of the sensing signal.

For example, orthogonal frequency division multiplex (Orthogonal Frequency Division Multiplex, OFDM), single-carrier frequency-division multiple access (Single-carrier Frequency-Division Multiple Access, SC-FDMA), orthogonal time frequency space (Orthogonal Time Frequency Space, OTFS), frequency modulated continuous wave (Frequency Modulated Continuous Wave, FMCW), pulse signal, and the like.

H102. Subcarrier spacing of the sensing signal.

For example, a subcarrier spacing of an OFDM system is 30KHz.

H103. Guard period of the sensing signal; where
It should be noted that the guard period refers to a time interval from a time when the signal ends to a time when the latest echo signal of the signal is received. This parameter is proportional to the maximum sensing distance, for example, may be calculated through 2dmax/c, and dmax is the maximum sensing distance (which belongs to a sensing requirement). For example, for a self-sent and self-received sensing signal, dmax represents the maximum distance from a sensing signal transceiver point to a signal transmitting point. In some cases, a cyclic prefix (Cyclic prefix, CP) of an OFDM signal can play the role of minimum guard period.

H104. Bandwidth of the sensing signal.

It should be noted that the parameter is inversely proportional to a range resolution and can be obtained by c/(2×delta_d), where delta_d is a range resolution (which belongs to a sensing requirement), and c is a speed of light.

H105. Burst (burst) duration of the sensing signal.

It should be noted that the burst duration is inversely proportional to a rate resolution (which belongs to the sensing requirement), and is a time span of the sensing signal, mainly for calculating a Doppler frequency offset. This parameter can be calculated by c/(2×delta_v×fc); where delta_v is a velocity resolution; and fc is a carrier frequency of the sensing signal.

H106. Time-domain interval of the sensing signal.

It should be noted that the time-domain interval can be calculated by c/(2×fc×v_range); where v_range is the maximum rate minus the minimum speed (which belongs to the sensing requirement). This parameter is a time interval between two adjacent sensing signals.

H107. Transmit signal power of the sensing signal.

For example, one value is taken every 2dBm from -20dBm to 23dBm.

H108. Signal format of the sensing signal.

For example, the signal format may be: sounding reference signal (Sounding Reference Signal, SRS), demodulation reference signal (Demodulation Reference Signal, DMRS), positioning reference signal (Positioning Reference Signal, PRS), or other predefined signals, and information such as related sequence format.

H109. Signal direction of the sensing signal.

For example, the signal direction may be direction or beam information of the sensing signal.

H110. Time resource of the sensing signal.

For example, the time resource may be an index of a slot or symbol in which the sensing signal is located. There are two types of time resources: one is a one-time time resource, such as one symbol is used for sending one omnidirectional first signal; the other is a non-one-time time resource, such as a plurality of groups of periodic time resources or discontinuous time resources (which may include start time and end time). Each group of periodic time resources sends sensing signals of a same direction, and beam directions on different groups of periodic time resources are different.

H111. Frequency resource of the sensing signal.

Optionally, the frequency resource includes a center frequency, bandwidth, resource block (Resource Block, RB) or subcarrier, reference point A (Point A), starting bandwidth position, or the like of the sensing signal.

H112. Quasi co-location QCL relation of the sensing signal.

For example, the sensing signal includes a plurality of resources, and each resource is quasi co-located (Quasi co-location, QCL) with one synchronization signal block (Synchronization Signal Block, SSB), and QCL includes type (Type) A, B, C, or D.

It should be further noted that the measurement quantity mentioned in this embodiment of this application includes at least one of the following:
K11. First-type measurement quantity.

Specifically, the first-type measurement quantity includes at least one of the following:
K111. channel matrix H;
K112. received signal strength indicator (RSSI);
K113. reference signal received power (RSRP);
K114. channel state information (CSI);
K115. power of each path in a multipath channel;
K116. delay of each path in a multipath channel;
K117. angle information of each path in a multipath channel;
K118. Doppler spread;
K119. Doppler shift;
K120. a phase difference between a sensing signal received by a first antenna and a sensing signal received by a second antenna;
K121. a delay difference between a sensing signal received by the first antenna and a sensing signal received by the second antenna; and
K122. a characteristic difference between an I signal and a Q signal.

It should be noted that the characteristic difference may be a phase difference between the I signal and the Q signal or other differences.

Herein, it should be noted that the I signal and the Q signal are an in-phase signal and a quadrature signal respectively, whre I is in-phase, Q is quadrature, and the phase difference between the I signal and the Q signal is 90 degrees.

K12. Second-type measurement quantity.

Specifically, the second-type measurement quantity includes at least one of the following:
K121. Characteristic information of a target object.

It should be noted that the characteristic information of the target object is information that can reflect the attribute or state of the target object, and may be at least one of the following: existence of the target object, distance of the target object, location of the target object, speed of the target object, acceleration of the target object, material of the target object, shape of the target object, category of the target object, Radar cross section (Radar Cross Section, RCS) of the target object, polarization scattering characteristic, and the like.

K122. Related information of a target event.

It should be noted that the related information of the target event is information related to the target event, that is, information that can be detected/sensed when the target event occurs, and may be at least one of the following: fall detection, intrusion detection, quantity statistics, indoor positioning, gesture recognition, lip recognition, gait recognition, expression recognition, respiratory monitoring, heart rate monitoring, and so on.

K123: Related information of a target environment.

It should be noted that the related information of the target environment may be at least one of the following: humidity, brightness, temperature and humidity, atmospheric pressure, air quality, weather conditions, topography, building/vegetation distribution, population statistics, crowd density, vehicle density, and the like.

Optionally, the measurement quantity may further include at least one of the following:
K21. Location, material, shape, and/or category of a reflection point.
K22. Radar spectrum information.

Optionally, the measurement quantity is a measurement quantity for each antenna or a measurement quantity for each sensing resource.

For example, the measurement quantity is a measurement quantity of each antenna (port) at the transmitter end or the receiver end, or the measurement quantity is a measurement quantity of each sensing resource, such as a measurement quantity of each resource block (Resource Block, RB), subcarrier, or RB group.

It should be noted that, in a case that the core network sends sensing related information to the base station, the core network or the sensing network function entity/sensing network element determines, based on a target region, which base station is the associated base station, and determines a direction for sending the sensing signal by the base station.

The following describes examples of specific application scenarios in actual application.

Specific application case 1: The base station A sends a sensing signal, the UE receives the sensing signal, and the third-party application initiates a sensing service.

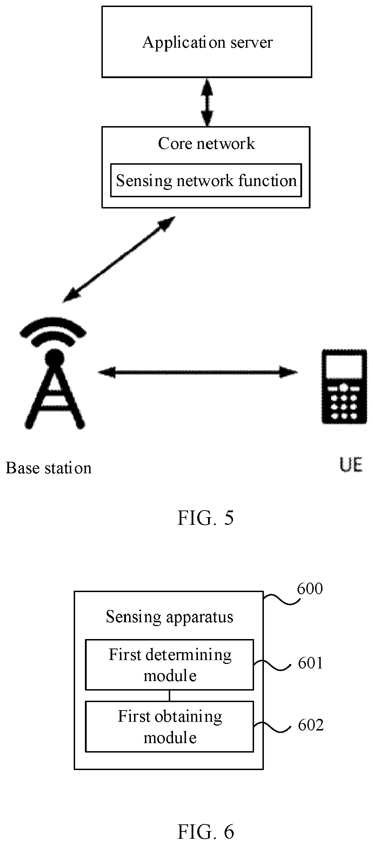

The network device involved in this case is shown in FIG. 5, and the implementation process in this case is mainly as follows:
Step S101: The application server receives a sensing requirement of a third-party application.

For example, the sensing requirement is a three-dimensional map of the sensing target region (accuracy/resolution of the map is 5m), the target region may be a designated region such as a surrounding area of a building, or a surrounding area of the target UE. The sensing requirement may include information about the target region, such as information of latitude and longitude (range) of the region.

Step S102: The application server (including an in-network server such as an Intranet Management System (Intranet Management System, IMS) or an off-network server) sends a sensing requirement to the core network (for example, the AMF) or the sensing network function entity/sensing network element (if any); or, the application server sends the sensing requirement to the AMF, and the AMF forwards the requirement to the sensing network function entity/sensing network element.

It should be noted herein that the sensing network function entity/sensing network element exchange target information with the target UE or the serving base station of the target UE or the base station associated with the target region (target information includes processing sensing request, interactive sensing capability, interactive sensing auxiliary data, interactive sensing measurement quantity or sensing result) to obtain a target sensing result or sensing measurement quantity (uplink measurement quantity or downlink measurement quantity); or may interact with other network elements/functions in the core network based on the target region to obtain information about a base station that may require interaction information.

It should be further noted that the core network (or the sensing network function entity/sensing network element), the application server, or other nodes (such as the AMF) complete the supervision process. If the AMF forwards the requirement to the sensing network function entity/sensing network element, and a plurality of sensing network functional entities/sensing network elements may correspond to one AMF, there is a selection problem for the sensing network function entity/sensing network element (selection is made by the AMF):
The factors to be considered when the AMF selects a sensing network function entity/sensing network element include at least one of the following: requested QoS (such as sensing accuracy, response time, and sensing QoS level), access type (third generation partnership projects (Third Generation Partnership Projects, 3GPP) access/non-3GPP access), fifth-generation mobile communication technology (5th-Generation, 5G) access network (Access Network, AN) type (that is, 5G NR or eLTE) and serving AN node (that is, gNodeB or NG-eNodeB) of the target UE, RAN configuration information, capability of the sensing network function entity/sensing network element, load of the sensing network function entity/sensing network element, location of the sensing network function entity/sensing network element, indication of single event reporting or multi-event reporting, event reporting duration, network slice information, and the like.

Step S103: The core network (or the sensing network function entity/sensing network element) sends the sensing requirement or configuration information for the sensing signal to the base station A.

It should be further noted that the configuration information for the sensing signal can alternatively be associated with the sensing requirement, and only the sensing requirement needs to be notified; and the receiver end determines the configuration information for the sensing signal based on the sensing requirement and the association relationship.

Optionally, the manner of determining the configuration information for the sensing signal based on the sensing requirement (for example, determining a bandwidth of the sensing signal based on a sensing resolution requirement) can be at least one of the following manners:
Y11. Base station A reports its own sensing capability (capability related to transmission of sensing signals, such as the maximum bandwidth for sending sensing signals and the maximum transmission power for sensing signals) to the core network, and/or the UE reports its sensing capability (capability related to receiving of sensing signals, such as the maximum bandwidth for receiving sensing signals and the measurement quantity supported for sensing signals) to the core network (the AMF or the sensing network function entity/sensing network element). Then the core network determines the configuration information for the sensing signal based on the sensing requirement.
Y12. The base station determines the configuration information for the sensing signal based on the sensing requirement.
Y13. The core network recommends the configuration information for the sensing signal to the base station based on the sensing requirement, and the base station finally determines the configuration information for the sensing signal.
Y14. The base station recommends the configuration information for the sensing signal to the core network based on the sensing requirement, and the core network finally determines the configuration information for the sensing signal.
Y15. The UE sends the recommended configuration information for the sensing signal to the base station, and the base station determines the configuration information for the sensing signal.
Y16. The UE sends the recommended configuration information for the sensing signal to the core network, and the core network determines the configuration information for the sensing signal.
Y17. At least two of the core network, the base station, and the UE each determine part of the configuration information for the sensing signal.

It should be noted herein that the method for determining a base station A is as follows: the core network or the sensing network function entity/sensing network element determines an associated base station as the base station A based on a target region, and determines a direction for sending a sensing signal by the base station A.

Step S104: The core network (or the sensing network function entity/sensing network element) or the base station A sends the configuration information (including time-frequency information, sequence information, and the like) for the sensing signal or the sensing requirement to the UE.

The base station determines the UE participating in sensing (that is receiving a sensing signal), or the AMF/ sensing network function entity/sensing network element determines UE participating in sensing.

Specifically, for a manner of determining the UE participating in sensing, refer to the above description. Details are not repeated herein.

It should be noted that after determining the UE participating in sensing, the base station may further sort the UE based on related information of a sensing measurement signal reported by the UE, for example, measurement quantity such as RSSI, RSRP, or mobility.

Step S105: The core network (or the sensing network function entity/sensing network element) or the base station A sends to the UE a measurement quantity (such as angle-of-arrival (Angle-of-Arrival, AOA), angel of departure (Angel of Departure, AOD), time delay, RSRP, or radar spectrum information) related to the sensing signal that needs to be measured by the UE.

The measurement quantity is determined by the UE based on the sensing requirement, without requiring a separate signaling indication (a mapping table between sensing requirements to measurement quantities).

Step S106. The base station A sends a sensing signal.

It should be noted that the base station A sends the sensing signal in a beam sweeping (beam sweeping) manner.

Step S107: The UE receives the sensing signal.

After receiving the sensing signal, the UE may obtain a measured value corresponding to the measurement quantity, and one of the following processing manners can be selected for the measured value.

Processing manner 1. The conversion from a measurement quantity to a sensing result is implemented in the core network or the application server.

Step S108: The UE sends the measurement quantity to the base station A, and the base station A sends the measurement quantity to the core network (or the sensing network function entity/sensing network element).

Step S109: The core network (or the sensing network function entity/sensing network element) sends the measurement quantity to the application server, and the application server determines a sensing result based on the measurement quantity; or
the core network (or the sensing network function entity/sensing network element) determines a sensing result based on the measurement quantity, and sends the sensing result to the application server.

Step S110: The application server sends the sensing result to the third-party application.

Processing manner 2: The conversion from a measurement quantity to a sensing result is implemented at the base station.

Step S108: The UE sends the measurement quantity to the base station A.

Step S109: The base station A determines a sensing result based on the measurement quantity, and sends the sensing result to the core network (or the sensing network function entity/sensing network element).

Step S110: The core network (or the sensing network function entity/sensing network element) sends the sensing result to the application server.

Step S111: The application server sends the sensing result to the third-party application.

It should be noted that, in this processing manner, the conversion from a measurement quantity (such as angle information or RSRP information) to a sensing result (such as three-dimensional map) is implemented at the base station A.

Processing manner 3: The conversion from a measurement quantity to a sensing result is implemented at the UE.

Step S108. The UE determines a sensing result based on the measurement quantity.

Step S109: The UE sends the sensing result to the base station A, and the base station A sends the sensing result to the core network (or the sensing network function entity/sensing network element).

Step S110: The core network (or the sensing network function entity/sensing network element) sends the sensing result to the application server.

Step S111: The application server sends the sensing result to the third-party application.

It should be further noted that related information of base station A such as antenna position, synchronization information (SFN start time), or AI related information also needs to be sent to a node that completes the foregoing conversion to assist in completing the conversion process.

It should be further noted that the charging function is implemented in the core network or the application server.

It should be further noted that the sensing signal in the foregoing procedure may be sent by a plurality of base stations/transmission reception points (Transmission Reception Point, TRP), and the sensing signal can also be received by a plurality of UEs. In this case, the core network needs to determine a set of base stations for sending sensing signals and a set of base stations for receiving sensing signals, and send configuration information for the sensing signals of the plurality of base stations to the corresponding plurality of base stations and the corresponding plurality of UEs respectively, and send, to the corresponding plurality of UEs, measurement quantities related to sensing signals that need to be measured for the base stations, respectively. Optionally, a plurality of sending base stations need to interact configuration information for the sensing signal (for example, a base station acting as a coordinator sends the configuration information for the sensing signal to other sending base stations and sends a measurement quantity related to the sensing signal to the UE). Correspondingly, the base station A in the above procedure may be TRP A.

It should be further noted that, after the UE receives a sensing requirement or sensing-related measurement quantity sent by the first network device or the second network device, the UE may reject the sensing requirement or accept the sensing requirement.

Specific application case 2. The base station A sends a sensing signal, the UE receives the sensing signal, and the core network (or the network management system or base station) initiates a sensing service.

In this case, the implementation process is mainly as follows:
Step S201: The core network AMF sends a sensing requirement or configuration information for the sensing signal to the sensing network function entity/sensing network element.

For example, the sensing requirement is a three-dimensional map of the sensing target region (accuracy/resolution of the map is 5m), the target region may be a designated region such as a surrounding area of a building, or a surrounding area of the target UE. The sensing requirement may include information about the target region, such as information of latitude and longitude (range) of the region; or
the AMF receives a sensing requirement or configuration information for the sensing signal sent by the network management system and forwards it to the sensing network function entity/sensing network element; or
the AMF receives a sensing requirement or configuration information of sensing signal sent by the base station and forwards it to the sensing network function entity/sensing network element (note: the sensing requirement or the configuration information for the sensing signal of base station A may not be sent to the core network, but may be directly sent to base station B).

Step S202: The sensing network function entity/sensing network element (characteristics of the sensing network function entity/sensing network element are the same as those described in the first application) sends the sensing requirement or the configuration information for the sensing signal to the base station A (or the AMF sends the sensing requirement or the configuration information for the sensing signal to the base station A).

It should be further noted that the configuration information for the sensing signal can alternatively be associated with the sensing requirement, and only the sensing requirement needs to be notified; and the receiver end determines the configuration information for the sensing signal based on the sensing requirement and the association relationship.

Optionally, the specific implementation of determining the configuration information for the sensing signal based on the sensing requirement (for example, determining a bandwidth for the sensing signal based on a sensing resolution requirement) is the same as that in the specific application case 1, and will not be repeated herein.

The configuration information for the sensing signal and the measurement quantity for the sensing signal are the same as those in specific application case 1.

Step S203: The core network (or the sensing network function entity/sensing network element) or the base station A sends the configuration information for the sensing signal (including time-frequency information, sequence information, or the like) or the sensing requirements to the UE (the receiving base station).

Optionally, for the manner of determining UE participating in sensing by the core network or the base station, refer to the above description. Details are not repeated herein.

Step S204: The core network (or the sensing network function entity/sensing network element) or the base station A sends the measurement quantity (such as AOA, AOD, time delay, RSRP, or radar spectrum information) related to the sensing signal to the UE; or
the measurement quantity is determined by the UE based on the sensing requirement, without requiring a separate signaling indication (a mapping table between sensing requirements to measurement quantities).

Step S205. The base station A sends a sensing signal.

It should be noted that the base station A sends the sensing signal in a beam sweeping manner.

Step S206: The UE receives the sensing signal.

After receiving the sensing signal, the UE may obtain a measured value corresponding to the measurement quantity, and one of the following processing manners can be selected for the measured value.

Processing manner 1: The conversion from a measurement quantity to a sensing result is implemented in the core network.

Step S207: The UE sends the measurement quantity to the base station A.

Step S208: The base station A sends the measurement quantity to the core network (the AMF or the sensing network function entity/sensing network element).

Step S209: The core network (the AMF or the sensing network function entity/sensing network element) converts the measurement quantity into a sensing result.

Processing manner 2: The conversion from a measurement quantity to a sensing result is implemented at the base station.

Step S207: The UE sends the measurement quantity to the base station A.

Step S208. The base station A determines a sensing result based on the measurement quantity.

Step S209: The base station A sends the sensing result to the core network (the AMF or the sensing network function entity/sensing network element).

It should be further noted that, after the UE receives a sensing requirement or sensing-related measurement quantity sent by the first network device or the second network device, the UE may reject the sensing requirement or accept the sensing requirement.

Processing manner 3: The conversion from a measurement quantity to a sensing result is implemented at the UE.

Step S207: The UE determines a sensing result based on the measurement quantity.

Step S208: The UE sends the sensing result to the base station A.

Step S209: The base station A sends the sensing result to the core network (or the sensing network function entity/sensing network element).

It should be noted here that if the sensing network function entity/sensing network element is deployed in the base station, an optional scheme is that the entire sensing service may not go through the core network.

It should be further noted that the sensing signal in the foregoing procedure may be sent by a plurality of base stations/TRPs, and the sensing signal can also be received by a plurality of UEs. In this case, the core network needs to determine a set of base stations for sending sensing signals and a set of base stations for receiving sensing signals, and send configuration information for the sensing signals of the plurality of base stations to the corresponding plurality of base stations and the corresponding plurality of UEs respectively, and send, to the corresponding plurality of UEs, measurement quantities related to sensing signals that need to be measured for the base stations, respectively. Optionally, a plurality of sending base stations need to interact configuration information for the sensing signal (for example, a base station acting as a coordinator sends the configuration information for the sensing signal to other sending base stations and sends a measurement quantity related to the sensing signal to the UE). Correspondingly, the base station A in the above procedure may be TRP A.

Specific application case 3: The base station A sends a sensing signal, the UE receives the sensing signal, and the UE initiates a sensing service.

In this case, the implementation process is mainly as follows:
Step S301: The UE sends a sensing requirement or configuration information for the sensing signal to the AMF using NAS signaling.

For example, the sensing requirement is a three-dimensional map of the sensing target region (accuracy/resolution of the map is 5m), the target region may be a designated region such as a surrounding area of a building, or a surrounding area of the target UE. The sensing requirement may include information about the target region, such as information of latitude and longitude (range) of the region.

Step S302: The AMF sends the sensing requirement or the configuration information for the sensing signal to the sensing network function entity/sensing network element.

Step S303: The sensing network function entity/sensing network element (characteristics of the sensing network function entity/sensing network element are the same as those described in the first application) sends the sensing requirement or the configuration information for the sensing signal to the base station A (or the AMF sends the sensing requirement or the configuration information for the sensing signal to the base station A)

It should be further noted that the configuration information for the sensing signal can alternatively be associated with the sensing requirement, and only the sensing requirement needs to be notified; and the receiver end determines the configuration information for the sensing signal based on the sensing requirement and the association relationship.

Optionally, the manner of determining the configuration information for the sensing signal based on the sensing requirement (for example, determining a bandwidth of the sensing signal based on a sensing resolution requirement) includes at least one of the following manners:
Y21. Base station A reports its own sensing capability (capability related to transmission of sensing signals, such as the maximum bandwidth for sending sensing signals and the maximum transmission power for sensing signals) to the core network (the AMF or the sensing network function entity/sensing network element), and/or the UE reports its sensing capability (capability related to receiving of sensing signals, such as the maximum bandwidth for receiving sensing signals and the measurement quantity supported for sensing signals) to the core network. Then the core network determines the configuration information for the sensing signal based on the sensing requirement.
Y22. The base station determines the configuration information for the sensing signal based on the sensing requirement.
Y23. The core network determines configuration information for one part of the sensing signal, and the base station determines configuration information for the other part of the sensing signal.
Y24. The core network recommends the configuration information for the sensing signal to the base station based on the sensing requirements, and the base station finally determines the configuration information for the sensing signal.
Y25. The base station recommends the configuration information for the sensing signal to the core network based on the sensing requirement, and the core network finally determines the configuration information for the sensing signal.
Y26. The UE recommends the configuration information for the sensing signal to the base station based on the sensing requirements, and the base station finally determines the configuration information for the sensing signal.
Y27. The UE recommends the configuration information for the sensing signal to the core network based on the sensing requirement, and the core network finally determines the configuration information for the sensing signal.
Y28. The UE determines the configuration information for the sensing signal based on the sensing requirement.

Step S304: The core network (or sensing network function entity/sensing network element) or the base station A sends the configuration information (including time-frequency information, sequence information, and the like) for the sensing signal or the sensing requirement to the UE.

Step S305: The core network (or the sensing network function entity/sensing network element) or the base station A sends the measurement quantity (such as AOA, AOD, time delay, RSRP, or radar spectrum information) related to the sensing signal to the UE; or
the measurement quantity is determined by the UE based on the sensing requirement, without requiring a separate signaling indication (a mapping table between sensing requirements to measurement quantities).

Step S306. The base station A sends a sensing signal.

It should be noted that the base station A sends the sensing signal in a beam sweeping manner.

Step S307: The UE receives the sensing signal.

After receiving the sensing signal, the UE may obtain a measured value corresponding to the measurement quantity, and one of the following processing manners can be selected for the measured value.

Processing manner 1: The conversion from a measurement quantity to a sensing result is implemented in the core network.

Step S308: The UE sends the measurement quantity to the base station A.

Step S309: The base station A sends the measurement quantity to the core network (the AMF or the sensing network function entity/sensing network element).

Step S310: The core network (the AMF or the sensing network function entity/sensing network element) determines a sensing result based on the measurement quantity.

Step S311: The core network (the AMF or the sensing network function entity/sensing network element) sends the sensing result to the UE (via NAS signaling).

Processing manner 2: The conversion from a measurement quantity to a sensing result is implemented at the base station A.

Step S308: The UE sends the measurement quantity to the base station A.

Step S309: The base station A determines a sensing result based on the measurement quantity, and sends the sensing result to the core network (the AMF or the sensing network function entity/sensing network element).

Step S310: The core network (the AMF or the sensing network function entity/sensing network element) sends the sensing result to the UE (via NAS signaling).

Processing manner 3: The conversion from a measurement quantity to a sensing result is implemented at the UE.

Step S308: The UE determines a sensing result based on the measurement quantity.

It should be further noted that the sensing signal in the foregoing procedure may be sent by a plurality of base stations/TRPs, and the sensing signal can also be received by a plurality of UEs. In this case, the core network needs to determine a set of base stations for sending sensing signals and a set of base stations for receiving sensing signals, and send configuration information for the sensing signals of the plurality of base stations to the corresponding plurality of base stations and the corresponding plurality of UEs respectively, and send, to the corresponding plurality of UEs, measurement quantities related to sensing signals that need to be measured for the base stations, respectively. Optionally, a plurality of sending base stations need to interact configuration information for the sensing signal (for example, a base station acting as a coordinator sends the configuration information for the sensing signal to other sending base stations and sends a measurement quantity related to the sensing signal to the UE). Correspondingly, the base station A in the above procedure may be TRP A.

It should be further noted that, after the UE receives a sensing requirement or sensing-related measurement quantity sent by the first network device or the second network device, the UE may reject the sensing requirement or accept the sensing requirement.

Specific application case 4. The base station A sends a sensing signal, the UE receives the sensing signal, and the third-party application initiates a sensing service (the sensing signal is a broadcast sensing signal, and the entire sensing service is transparent to the base station).

In this case, the implementation process is mainly as follows:

Step S401: The application server receives a sensing requirement of a third-party application.

For example, the sensing requirement is a three-dimensional map of the sensing target region (accuracy/resolution of the map is 5m), the target region may be a designated region such as a surrounding area of a building, or a surrounding area of the target UE. The sensing requirement may include information about the target region, such as information of latitude and longitude (range) of the region.

Step S402: The application server (including an in-network server such as an IMS or an out-of-network server) sends a sensing requirement to the core network (such as the AMF) or a sensing network function entity/sensing network element in the core network (if any); or
the application server sends the sensing requirement to the AMF, and the AMF forwards the requirement to the sensing network function entity/sensing network element.

Step S403: The core network (or the sensing network function entity/sensing network element) sends to the UE the sensing requirement or index information of the sensing signal that needs to be measured by the UE; or
the index information for the sensing signal is associated with the sensing requirement, and only the sensing requirement needs to be notified; and the receiver end determines information for the sensing signal based on the sensing requirement and the association relationship.

Optionally, the base station determines the UE participating in sensing (that is receiving a sensing signal), or the AMF/ sensing network function entity/sensing network element determines UE participating in sensing.

Specifically, for a manner of determining the UE participating in sensing, refer to the above description. Details are not repeated herein.

Step S404: The core network (or the sensing network function entity/sensing network element) sends to the UE related measurement quantities (such as AOA, AOD, time delay, RSRP, or radar spectrum information) for the sensing signal that are to be reported by the UE; or
the measurement quantity is determined by the UE based on the sensing requirement, without requiring a separate signaling indication (a mapping table between sensing requirements to measurement quantities).

Step S405: The base station A sends a sensing signal (broadcast sensing signal).

It should be noted that the base station A sends the sensing signal in a beam sweeping manner.

Step S406: The UE receives the sensing signal.

It should be further noted that before the UE receives the sensing signal, the UE reads broadcast signaling to obtain the configuration information for the sensing signal.

After receiving the sensing signal, the UE may obtain a measured value corresponding to the measurement quantity, and one of the following processing manners can be selected for the measured value.

Processing manner 1. The conversion from a measurement quantity to a sensing result is implemented in the core network or the application server.

Step S407: The UE sends the measurement quantity to the base station A, and the base station A sends the measurement quantity to the core network (or the sensing network function entity/sensing network element).

Step S408: The core network (or the sensing network function entity/sensing network element) sends the measurement quantity to the application server, and the application server determines a sensing result based on the measurement quantity; or
the core network (or the sensing network function entity/sensing network element) determines a sensing result based on the measurement quantity, and sends the sensing result to the application server.

Step S409: The application server sends the sensing result to the third-party application.

Processing manner 2: The conversion from a measurement quantity to a sensing result is implemented at the UE.

Step S407: The UE determines a sensing result based on the measurement quantity.

Step S408: The UE sends the sensing result to the base station A, and the base station A sends the sensing result to the core network (or the sensing network function entity/sensing network element).

Step S409: The core network (or the sensing network function entity/sensing network element) sends the sensing result to the application server.

Step S410: The application server sends the sensing result to the third-party application.

It should be noted that the sensing signal in the foregoing procedure may be sent by a plurality of base stations/TRPs, and the sensing signal can also be received by a plurality of UEs. In this case, the core network needs to determine a set of base stations for sending sensing signals and a set of base stations for receiving sensing signals, and send configuration information for the sensing signals of the plurality of base stations to the corresponding plurality of base stations and the corresponding plurality of UEs respectively, and send, to the corresponding plurality of UEs, measurement quantities related to sensing signals that need to be measured for the base stations, respectively. Optionally, a plurality of sending base stations need to interact configuration information for the sensing signal (for example, a base station acting as a coordinator sends the configuration information for the sensing signal to other sending base stations and sends a measurement quantity related to the sensing signal to the UE). Optionally, the base station A in the above procedure may be TRP A.

It should be further noted that, after the UE receives a sensing requirement or sensing-related measurement quantity sent by the first network device or the second network device, the UE may reject the sensing requirement or accept the sensing requirement.

Specific application case 5. The base station A sends a sensing signal, the UE receives the sensing signal, and the core network (or the network management system or base station) initiates a sensing service (the sensing signal is a broadcast sensing signal, and the entire sensing service is transparent to the base station).

In this case, the implementation process is mainly as follows:
Step S501: The core network AMF sends a sensing requirement or configuration information for the sensing signal to the sensing network function entity/sensing network element.

For example, the sensing requirement is a three-dimensional map of the sensing target region (accuracy/resolution of the map is 5m), the target region may be a designated region such as a surrounding area of a building, or a surrounding area of the target UE. The sensing requirement may include information about the target region, such as information of latitude and longitude (range) of the region; or
the AMF receives a sensing requirement or configuration information for the sensing signal sent by the network management system and forwards it to the sensing network function entity/sensing network element; or
the AMF receives a sensing requirement or configuration information of sensing signal sent by the base station and forwards it to the sensing network function entity/sensing network element (note: the sensing requirement or the configuration information for the sensing signal of base station A may not be sent to the core network, but may be directly sent to base station B).

Step S502: The sensing network function entity/sensing network element sends the sensing requirement or the configuration information for the sensing signal to the base station A (or the AMF sends the sensing requirement or the configuration information for the sensing signal to the base station A); or
the configuration information for the sensing signal is associated with the sensing requirement, and only the sensing requirement needs to be notified; and the receiver end determines the configuration information for the sensing signal based on the sensing requirement and the association relationship.

For the manner of determining the configuration information for the sensing signal based on the sensing requirements, refer to the above description. Details are not repeated herein.

Step S503: The core network (or the sensing network function entity/sensing network element) sends to the UE the sensing requirement or index information of the sensing signal that needs to be measured by the UE; or
the index information for the sensing signal is associated with the sensing requirement, and only the sensing requirement needs to be notified; and the receiver end determines the index information for the sensing signal based on the sensing requirement and the association relationship.

The base station determines the UE participating in sensing (that is receiving a sensing signal), or the AMF/ sensing network function entity/sensing network element determines UE participating in sensing.

Optionally, for a manner of determining the UE participating in sensing, refer to the above description. Details are not repeated herein.

Step S504: The core network (or the sensing network function entity/sensing network element) sends to the UE related measurement quantities (such as AOA, AOD, time delay, RSRP, or radar spectrum information) for the sensing signal that are to be reported by the UE; or
the measurement quantity is determined by the UE based on the sensing requirement, without requiring a separate signaling indication (a mapping table between sensing requirements to measurement quantities).

Step S505: The base station A sends a sensing signal (broadcast sensing signal).

It should be noted that the base station A sends the sensing signal in a beam sweeping manner.

Step S506: The UE receives the sensing signal.

It should be further noted that before the UE receives the sensing signal, the UE reads broadcast signaling to obtain the configuration information for the sensing signal.

After receiving the sensing signal, the UE may obtain a measured value corresponding to the measurement quantity, and one of the following processing manners can be selected for the measured value.

Processing manner 1: The conversion from a measurement quantity to a sensing result is implemented in the core network.

Step S507: The UE sends the measurement quantity to the base station A.

Step S508: The base station A sends the measurement quantity to the core network (the AMF or the sensing network function entity/sensing network element).

Step S509: The core network (the AMF or the sensing network function entity/sensing network element) converts the measurement quantity into a sensing result.

Processing manner 2: The conversion from a measurement quantity to a sensing result is implemented at the base station.

Step S507: The UE sends the measurement quantity to the base station A.

Step S508. The base station A determines a sensing result based on the measurement quantity.

Step S509: The base station A sends the sensing result to the core network (the AMF or the sensing network function entity/sensing network element).

Processing manner 3: The conversion from a measurement quantity to a sensing result is implemented at the UE.

Step S507: The UE determines a sensing result based on the measurement quantity.

Step S508: The UE sends the sensing result to the base station A.

Step S509: The base station A sends the sensing result to the core network (or the sensing network function entity/sensing network element).

It should be noted here that if the sensing network function entity/sensing network element is deployed in the base station, an optional scheme is that the entire sensing service may not go through the core network.

It should be noted that the sensing signal in the foregoing procedure may be sent by a plurality of base stations/TRPs, and the sensing signal can also be received by a plurality of UEs. In this case, the core network needs to determine a set of base stations for sending sensing signals and a set of base stations for receiving sensing signals, and send configuration information for the sensing signals of the plurality of base stations to the corresponding plurality of base stations and the corresponding plurality of UEs respectively, and send, to the corresponding plurality of UEs, measurement quantities related to sensing signals that need to be measured for the base stations, respectively. Optionally, a plurality of sending base stations need to interact configuration information for the sensing signal (for example, a base station acting as a coordinator sends the configuration information for the sensing signal to other sending base stations and sends a measurement quantity related to the sensing signal to the UE). Correspondingly, the base station A in the above procedure may be TRP A.

It should be further noted that, after the UE receives a sensing requirement or sensing-related measurement quantity sent by the first network device or the second network device, the UE may reject the sensing requirement or accept the sensing requirement.

Specific application case 6. The base station A sends a sensing signal, the UE receives the sensing signal, and the UE initiates a sensing service (the sensing signal sent by the base station A is a common sensing signal, such as an SSB. The entire sensing service is transparent to the base station).

In this case, the implementation process is mainly as follows:
Step S601: UE sends a sensing requirement to AMF (or other network elements of the core network) (via NAS signaling).

For example, the sensing requirement is a three-dimensional map of the sensing target region (accuracy/resolution of the map is 5m), the target region may be a designated region such as a surrounding area of a building, or a surrounding area of the target UE. The sensing requirement may include information about the target region, such as information of latitude and longitude (range) of the region.

Step S602: The AMF sends an ACK to the UE; or the AMF forwards the sensing request to the sensing network function entity/sensing network element, and the sensing network function entity/sensing network element sends an ACK to the UE.

Step S603: Optionally, the AMF sends to the UE a measurement quantity that needs to be reported by the UE for the sensing request.

Step S604: The UE sends to the AMF a measured value obtained by receiving a sensing signal sent by the base station.

It should be noted that before the UE receives the sensing signal, the UE reads broadcast signaling to obtain the configuration information for the sensing signal.

Step S605: The AMF sends the measured value to the core network.

Step S606: The core network (the AMF or the sensing network function entity/sensing network element) determines a sensing result based on the measurement quantity.

Step S607: The core network (for example, the AMF or sensing network function entity/sensing network element) sends the sensing result to the UE.

It should be noted that the core network usually sends the sensing result to the terminal using NAS signaling.

It should be further noted that the sensing signal in the foregoing procedure may be sent by a plurality of base stations/TRPs, and the sensing signal can also be received by a plurality of UEs. In this case, the core network needs to determine a set of base stations for sending sensing signals and a set of base stations for receiving sensing signals, and send configuration information for the sensing signals of the plurality of base stations to the corresponding plurality of base stations and the corresponding plurality of UEs respectively, and send, to the corresponding plurality of UEs, measurement quantities related to sensing signals that need to be measured for the base stations, respectively. Optionally, a plurality of sending base stations need to interact configuration information for the sensing signal (for example, a base station acting as a coordinator sends the configuration information for the sensing signal to other sending base stations and sends a measurement quantity related to the sensing signal to the UE). Optionally, the base station A in the above procedure may be TRP A.

It should be further noted that, after the UE receives a sensing requirement or sensing-related measurement quantity sent by the first network device or the second network device, the UE may reject the sensing requirement or accept the sensing requirement.

It should be noted that the sensing service mentioned in the embodiment of this application may be: weather monitoring, reconstruction of three-dimensional maps, traffic/crowd sensing, air quality detection such as PM2.5, monitoring of pollutants in factories, monitoring of farm animals, or recognition of human actions/postures.

It should be further noted that in all the specific application cases 4, 5, and 6 in this application, the base station A sends a sensing signal and the UE receives the sensing signal (the sensing signal is a broadcast sensing signal, and the entire sensing service is transparent to the base station), while the sensing signal in the specific application cases 1, 2, and 3 is dedicated.

It should be noted that this embodiment of this application provides a wireless sensing related procedures based on the sensing signal sent by the base station, specifically including a sensing procedure in which the base station sends a sensing signal and the UE receives the sensing signal, signaling interaction between different sensing nodes, and adding functions of the sensing network function entity/sensing network element, thereby improving the network communication procedure and ensuring smooth implementation of sensing.

It should be noted that, for the sensing method provided by the embodiments of this application, the execution body may be a sensing apparatus, or a control module for executing the sensing method in the sensing apparatus. In the embodiments of this application, the sensing method being performed by the sensing apparatus is used as an example to describe the sensing apparatus provided in the embodiments of this application.

As shown in FIG. 6, an embodiment of this application provides a sensing apparatus 600, applied to a terminal and including:
a first determining module 601, configured to determine a measurement quantity for a sensing signal; and
a first obtaining module 602, configured to perform detection on the sensing signal and obtain a measured value corresponding to the measurement quantity; where
the sensing signal is sent by a first network device, and the first network device is a base station.

Optionally, the first determining module 601 is configured to perform at least one of the following:
receiving first indication information sent by the first network device or a second network device, where the first indication information is used to indicate a measurement quantity for the sensing signal that needs to be measured by the terminal; and
based on a first sensing requirement, determining the measurement quantity for the sensing signal that needs to be measured by the terminal.

Optionally, before the first obtaining module 602 performs detection on the sensing signal and obtains the measured value corresponding to the measurement quantity, the sensing apparatus 600 further includes:
a second determining module, configured to determine configuration information for the sensing signal.

Optionally, the second determining module is configured to perform at least one of the following:
receiving first configuration information for the sensing signal, where the first configuration information is sent by the first network device;
receiving second configuration information for the sensing signal, where the second configuration information is sent by a second network device; and
determining, based on a first sensing requirement, third configuration information for the sensing signal.

Optionally, the second determining module is configured to:
obtain configuration information that is for the sensing signal and that is sent by the first network device using broadcast signaling.

Optionally, before the second determining module obtains the configuration information that is for the sensing signal and that is sent by the first network device using broadcast signaling, the sensing apparatus 600 further includes:
a third determining module, configured to determine, for the terminal based on first information, a to-be-measured sensing signal; where
the first information includes at least one of the following:
   a first sensing requirement sent by a second network device; and
   index information that is of the sensing signal to be measured by the terminal and that is sent by the second network device.

Optionally, the first sensing requirement satisfies at least one of the following:
being sent to the terminal by the first network device or the second network device; and
being generated by the terminal;
   and/or
the first sensing requirement is associated with at least one of the following:
   sensing object;
   sensing quantity; and
   sensing indicator.

Optionally, after the first obtaining module 602 obtains the measured value corresponding to the measurement quantity, the sensing apparatus 600 further includes:
a first execution module, configured to send the measurement quantity and the measured value corresponding to the measurement quantity to the first network device or a second network device; and
a second execution module, configured to determine a sensing result based on the measurement quantity and the measured value corresponding to the measurement quantity.

Optionally, after the first execution module sends the measured value corresponding to the measurement quantity to the first network device or the second network device, the sensing apparatus 600 further includes:
a first receiving module, configured to receive a sensing result from the second network device side.

Optionally, after the first execution modul determines a sensing result based on the measurement quantity and the measured value corresponding to the measurement quantity, the sensing apparatus 600 further includes:
a third transmitting module, configured to send the sensing result to the first network device.

Optionally, the sensing result includes at least one of the following:
characteristic information of a target object;
related information of a target event; and
related information of a target environment.

Optionally, the second network device includes a mobility and access management function AMF entity or a sensing function entity.

The sensing function entity satisfies at least one of the following:
managing overall coordination and scheduling of resources required by sensing;
calculating a sensing result;
estimating sensing accuracy;
verifying a sensing result;
supporting an immediate sensing request;
supporting a delayed sensing request;
supporting a periodic or event-triggered sensing request;
supporting canceling of a periodic or triggered sensing behavior; and
determining a sensing mode based on second information; where
the second information includes at least one of type of a sensing client, sensing quality of service QoS, sensing capability of the terminal, and sensing capability of the first network device; and
the sensing mode is associated with an entity that receives and sends a sensing signal.

Optionally, the configuration information for the sensing signal includes at least one of the following parameters:
waveform of the sensing signal;
subcarrier spacing of the sensing signal;
guard period of the sensing signal;
bandwidth of the sensing signal;
burst (burst) duration of the sensing signal;
time-domain interval of the sensing signal;
transmit signal power of the sensing signal;
signal format of the sensing signal;
signal direction of the sensing signal;
time resource of the sensing signal;
frequency resource of the sensing signal; and
Quasi-co-location QCL relation of the sensing signal.

Optionally, the measurement quantity includes at least one of the following:
first-type measurement quantity; and
second-type measurement quantity.

The first-type measurement quantity includes at least one of the following:
channel matrix H;
channel state information CSI;
power of each path in a multipath channel;
delay of each path in a multipath channel;
angle information of each path in a multipath channel;
Doppler spread;
Doppler shift;
a phase difference between a sensing signal received by a first antenna and a sensing signal received by a second antenna;
a delay difference between a sensing signal received by the first antenna and a sensing signal received by the second antenna; and
a characteristic difference between an I signal and a Q signal.

The second-type measurement quantity includes at least one of the following:
characteristic information of a target object;
related information of a target event; and
related information of a target environment.

Optionally, the measurement quantity is a measurement quantity for each antenna or a measurement quantity for each sensing resource.

It should be noted that the apparatus embodiments are about an apparatus corresponding to the foregoing method, and all the implementations in the foregoing method embodiments are applicable to the apparatus embodiments, with the same technical effects achieved. Details are not repeated herein.

The sensing apparatus in this embodiment of this application may be an apparatus, or an apparatus or electric device having an operating system, or may be a component, an integrated circuit, or a chip in the terminal. The apparatus or electric device may be a mobile terminal or a non-mobile terminal. For example, the mobile terminal may include, but is not limited to, a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (Vehicle User Equipment, VUE), or pedestrian user equipment (Pedestrian User Equipment, PUE). The wearable device includes: a wrist band, earphones, glasses, or the like. The non-mobile terminal may be a server, a network attached storage (Network Attached Storage, NAS), a personal computer (personal computer, PC), a television (television, TV), a teller machine, a self-service machine, or the like, which is not specifically limited in the embodiments of this application.

The sensing apparatus provided in this embodiment of this application is capable of implementing the processes implemented in the method embodiments in FIG. 4, with the same technical effects achieved. To avoid repetition, details are not described herein again.

An embodiment of the application further provides a terminal, including a processor and a communication interface, where the processor is configured to determine a measurement quantity for a sensing signal, perform detection on the sensing signal, and obtain a measured value corresponding to the measurement quantity; and
the sensing signal is sent by a first network device, and the first network device is a base station.

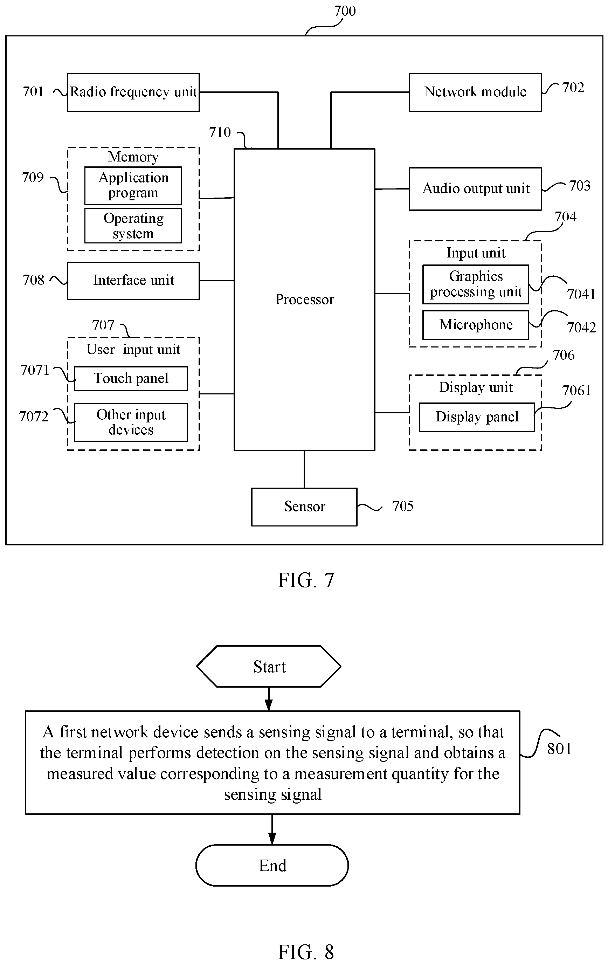

The terminal embodiments correspond to the foregoing terminal-side method embodiments, and the implementation processes and implementations of the foregoing method embodiments can be applied to the terminal embodiments, with the same technical effects achieved. Specifically, FIG. 7 is a schematic diagram of a hardware structure of a terminal for implementing the embodiments of this application.

The terminal 700 includes but is not limited to at least part of components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in the figure, or a combination of some components, or the components disposed differently. Details are not described herein again.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, and the like. The user input unit 707 may include a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In this embodiment of this application, the radio frequency unit 701 receives downlink data from a network device, and then sends the downlink data to the processor 710 for processing; and also sends uplink data to the network device. Generally, the radio frequency unit 701 includes but is not limited to an antenna, at least one amplifier, a transceiver, a coupler, a low noise amplifier, a duplexer, and the like.

The memory 709 may be configured to store software programs or instructions and various data. The memory 709 may include a program or instruction storage area and a data storage area. The program or instruction storage area may store an operating system, an application program or instruction required by at least one function (for example, a sound playback function or an image playback function), and the like. In addition, the memory 709 may include a high-speed random access memory, and may further include a non-volatile memory. The non-volatile memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another volatile solid-state storage device.

The processor 710 may include one or more processing units. Optionally, an application processor and a modem processor may be integrated in the processor 710. The application processor primarily processes an operating system, user interfaces, application programs or instructions, and the like. The modem processor primarily processes radio communication, for example, being a baseband processor. It can be understood that the modem processor may alternatively be not integrated in the processor 710.

The processor 710 is configured to:
determine a measurement quantity for a sensing signal; and
perform detection on the sensing signal and obtain a measured value corresponding to the measurement quantity; where
the sensing signal is sent by a first network device, and the first network device is a base station.

Optionally, the processor 710 is further configured to perform at least one of the following:
receiving first indication information sent by the first network device or a second network device, where the first indication information is used to indicate a measurement quantity for the sensing signal that needs to be measured by the terminal; and
based on a first sensing requirement, determining the measurement quantity for the sensing signal that needs to be measured by the terminal.

Optionally, the processor 710 is further configured to:
determine configuration information for the sensing signal.

Optionally, the processor 710 is further configured to perform at least one of the following:
receiving, by using the radio frequency unit 701, first configuration information for the sensing signal, where the first configuration information is sent by the first network device;
receiving, by using the radio frequency unit 701, second configuration information for the sensing signal, where the second configuration information is sent by the second network device;
determining, based on a first sensing requirement, third configuration information for the sensing signal.

Optionally, the processor 710 is further configured to:
obtain configuration information that is for the sensing signal and that is sent by the first network device using broadcast signaling.

Optionally, the processor 710 is further configured to:
determine, based on first information, a to-be-measured sensing signal; where
the first information includes at least one of the following:
   a first sensing requirement sent by a second network device; and
   index information that is of the sensing signal to be measured by the terminal and that is sent by the second network device.

Optionally, the first sensing requirement satisfies at least one of the following:
being sent to the terminal by the first network device or the second network device; and
being generated by the terminal;
   and/or
the first sensing requirement is associated with at least one of the following:
   sensing object;
   sensing quantity; and
   sensing indicator.

Optionally, the processor 710 is further configured to:
send the measurement quantity and the measured value corresponding to the measurement quantity to the first network device or a second network device by using the radio frequency unit 701; and
determine a sensing result based on the measurement quantity and the measured value corresponding to the measurement quantity.

Optionally, after the measured value corresponding to the measurement quantity is sent to the first network device or the second network device, the following is further included:
receiving a sensing result sent by the second network device.

Optionally, the radio frequency unit 701 is further configured to:
send the sensing result to the first network device.

Optionally, the sensing result includes at least one of the following:
characteristic information of a target object;
related information of a target event; and
related information of a target environment.

Optionally, the second network device includes a mobility and access management function AMF entity or a sensing function entity.

Optionally, the sensing function entity satisfies at least one of the following:
managing overall coordination and scheduling of resources required by sensing;
calculating a sensing result;
estimating sensing accuracy;
verifying a sensing result;
supporting an immediate sensing request;
supporting a delayed sensing request;
supporting a periodic or event-triggered sensing request;
supporting canceling of a periodic or triggered sensing behavior; and
determining a sensing mode based on second information; where
the second information includes at least one of type of a sensing client, sensing quality of service QoS, sensing capability of the terminal, and sensing capability of the first network device; and
the sensing mode is associated with an entity that receives and sends a sensing signal.

Optionally, the configuration information for the sensing signal includes at least one of the following parameters:
waveform of the sensing signal;
subcarrier spacing of the sensing signal;
guard period of the sensing signal;
bandwidth of the sensing signal;
burst (burst) duration of the sensing signal;
time-domain interval of the sensing signal;
transmit signal power of the sensing signal;
signal format of the sensing signal;
signal direction of the sensing signal;
time resource of the sensing signal;
frequency resource of the sensing signal; and
quasi co-location QCL relation of the sensing signal.

Optionally, the measurement quantity includes at least one of the following:
first-type measurement quantity; and
second-type measurement quantity.

The first-type measurement quantity includes at least one of the following:
channel matrix H;
channel state information CSI;
power of each path in a multipath channel;
delay of each path in a multipath channel;
angle information of each path in a multipath channel;
Doppler spread;
Doppler shift;
a phase difference between a sensing signal received by a first antenna and a sensing signal received by a second antenna;
a delay difference between a sensing signal received by the first antenna and a sensing signal received by the second antenna; and
a characteristic difference between an I signal and a Q signal.

The second-type measurement quantity includes at least one of the following:
characteristic information of a target object;
related information of a target event; and
related information of a target environment.

Optionally, the measurement quantity is a measurement quantity for each antenna or a measurement quantity for each sensing resource.

Optionally, an embodiment of this application further provides a terminal, including a processor, a memory, and a program or instructions stored in the memory and capable of running on the processor. When the program or instructions are executed by the processor, the processes of the foregoing sensing method are implemented, with the same technical effects achieved. To avoid repetition, details are not described herein again.

An embodiment of this application further provides a readable storage medium, where a program or instructions are stored in the readable storage medium. When the program or the instructions are executed by a processor, the processes of the foregoing embodiment of the sensing method described above can be implemented, with the same technical effects achieved. To avoid repetition, details are not described herein again. The readable storage medium is, for example, a read-only memory (Read-Only Memory, ROM), a random access memory (Random Access Memory, RAM), a magnetic disk, or an optical disc.

As shown in FIG. 8, an embodiment of this application further provides a sensing method including:
Step 801: A first network device sends a sensing signal to a terminal, so that the terminal performs detection on the sensing signal and obtains a measured value corresponding to a measurement quantity for the sensing signal.

The first network device is a base station.

Optionally, before the sending, by a first network device, a sensing signal to a terminal, the method further includes:
sending, by the first network device, first indication information to the terminal, where the first indication information is used to indicate a measurement quantity for the sensing signal that needs to be measured by the terminal.

Optionally, before the sending, by a first network device, a sensing signal to a terminal, the method further includes:
determining, by the first network device, configuration information for the sensing signal.

Optionally, the determining, by the first network device, configuration information for the sensing signal includes one of the following:
receiving, by the first network device, second configuration information that is for a sensing signal and that is sent by a second network device; and
determining, by the first network device based on third information, first configuration information for the sensing signal; where
the third information includes at least one of the following:
   first sensing requirement;
   first recommendation information for the configuration information, where the first recommendation information is determined by the second network device based on the first sensing requirement; and
   second recommendation information for the configuration information, where the second recommendation information is sent by the terminal to the first network device.

Optionally, after the determining, by the first network device, configuration information for the sensing signal, the method further includes:
sending, by the first network device, second indication information to the terminal; where
the second indication information includes at least one of the first configuration information for the sensing signal and the first sensing requirement.

Optionally, after the determining, by the first network device, configuration information for the sensing signal, the method further includes:
sending, by the first network device, the configuration information for the sensing signal using broadcast signaling.

Optionally, the determining, by the first network device, configuration information for the sensing signal includes:
determining, by the first network device based on a first sensing requirement, the configuration information for the sensing signal.

Optionally, the sending, by a first network device, a sensing signal to a terminal includes:
determining, by the first network device, at least one terminal that is to receive the sensing signal; and
sending, by the first network device, the sensing signal to the at least one terminal.

Optionally, the determining, by the first network device, at least one terminal that is to receive the sensing signal includes;
determining, by the first network device based on fourth information, the at least one terminal that is to receive the sensing signal; where
the fourth information includes one of the following:
   information about whether a terminal accesses the first network device;
   sensing capability reported by a terminal; and
   other priori information, where the other priori information includes terminal location information.

Optionally, the first sensing requirement is sent by the second network device to the first network device.

Optionally, the first sensing requirement is associated with at least one of the following:
sensing object;
sensing quantity; and
sensing indicator.

Optionally, after the sending, by a first network device, a sensing signal to a terminal, the method further includes:
receiving, by the first network device, the measurement quantity and the measured value corresponding to the measurement quantity that are sent by the terminal; and
performing a first operation based on the measurement quantity and the measured value corresponding to the measurement quantity; where
the first operation includes one of the following:
   sending the measurement quantity and the measured value corresponding to the measurement quantity to a second network device; and
   determining a sensing result based on the measurement quantity and the measured value corresponding to the measurement quantity, and sending the sensing result to the second network device.

Optionally, after the sending, by a first network device, a sensing signal to a terminal, the method further includes:
receiving, by the first network device, a sensing result that is for the measured value corresponding to the measurement quantity and that is sent by the terminal; and
sending the sensing result to the second network device.

Optionally, the sensing result includes at least one of the following:
characteristic information of a target object;
related information of a target event; and
related information of a target environment.

Optionally, the configuration information for the sensing signal includes at least one of the following parameters:
waveform of the sensing signal;
subcarrier spacing of the sensing signal;
guard period of the sensing signal;
bandwidth of the sensing signal;
burst (burst) duration of the sensing signal;
time-domain interval of the sensing signal;
transmit signal power of the sensing signal;
signal format of the sensing signal;
signal direction of the sensing signal;
time resource of the sensing signal;
frequency resource of the sensing signal; and
quasi co-location QCL relation of the sensing signal.

Optionally, the measurement quantity includes at least one of the following:
first-type measurement quantity; and
second-type measurement quantity.

The first-type measurement quantity includes at least one of the following:
channel matrix H;
channel state information CSI;
power of each path in a multipath channel;
delay of each path in a multipath channel;
angle information of each path in a multipath channel;
Doppler spread;
Doppler shift;
a phase difference between a sensing signal received by a first antenna and a sensing signal received by a second antenna;
a delay difference between a sensing signal received by the first antenna and a sensing signal received by the second antenna; and
a characteristic difference between an I signal and a Q signal.

The second-type measurement quantity includes at least one of the following:
characteristic information of a target object;
related information of a target event; and
related information of a target environment.

Optionally, the measurement quantity is a measurement quantity for each antenna or a measurement quantity for each sensing resource.

Optionally, the second network device includes a mobility and access management function AMF entity or a sensing function entity.

Optionally, the sensing function entity satisfies at least one of the following:
managing overall coordination and scheduling of resources required by sensing;
calculating a sensing result;
estimating sensing accuracy;
verifying a sensing result;
supporting an immediate sensing request;
supporting a delayed sensing request;
supporting a periodic or event-triggered sensing request;
supporting canceling of a periodic or triggered sensing behavior; and
determining a sensing mode based on second information; where
the second information includes at least one of type of a sensing client, sensing quality of service QoS, sensing capability of the terminal, and sensing capability of the first network device; and
the sensing mode is associated with an entity that receives and sends a sensing signal.

It should be noted that all the descriptions about the first network device in the foregoing embodiment are applicable to the embodiment of the sensing method, with the same technical effects achieved. Details are not repeated herein.

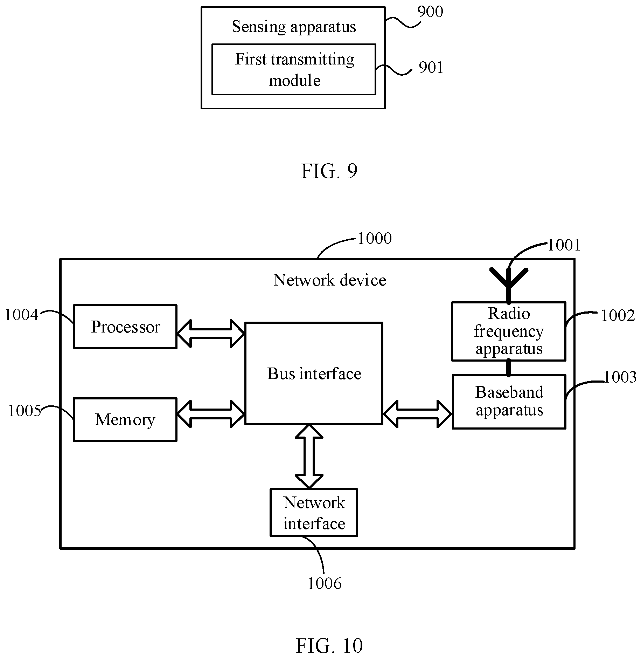

As shown in FIG. 9, an embodiment of the application further provides a sensing apparatus 900, applied to a first network device, where the first network device is a base station, including:
a first transmitting module 901, configured to send a sensing signal to a terminal, so that the terminal performs detection on the sensing signal and obtains a measured value corresponding to a measurement quantity for the sensing signal.

Optionally, before the first transmitting module 901 sends the sensing signal to the terminal, the sensing apparatus 900 further includes:
a fourth transmitting module, configured to send first indication information to the terminal, where the first indication information is used to indicate a measurement quantity for the sensing signal that needs to be measured by the terminal.

Optionally, before the first transmitting module 901 sends the sensing signal to the terminal, the sensing apparatus 900 further includes:
a fourth determining module, configured to determine configuration information for the sensing signal.

Optionally, the fourth determining module is configured to perform at least one of the following:
receiving second configuration information that is for a sensing signal and that is sent by a second network device; and
determining, based on third information, first configuration information for the sensing signal; where
the third information includes at least one of the following:
   first sensing requirement;
   first recommendation information for the configuration information, where the first recommendation information is determined by the second network device based on the first sensing requirement; and
   second recommendation information for the configuration information, where the second recommendation information is sent by the terminal to the first network device.

Optionally, after the third determining module determines the configuration information for the sensing signal, the sensing apparatus 900 further includes:
a fifth transmitting module, configured to send second indication information to the terminal; where
the second indication information includes at least one of the first configuration information for the sensing signal and the first sensing requirement.

Optionally, after the third determining module determines the configuration information for the sensing signal, the sensing apparatus 900 further includes:
a sixth transmitting module, configured to send the configuration information for the sensing signal using broadcast signaling.

Optionally, that the fourth determining module determines the configuration information for the sensing signal includes:
a fifth determining module, configured to determine, based on a first sensing requirement, the configuration information for the sensing signal.

Optionally, the first transmitting module 901 includes:
a first determining unit, configured to determine at least one terminal that is to receive the sensing signal; and
a first transmitting unit, configured to send the sensing signal to the at least one terminal.

Optionally, the first determining unit is configured to:
determine, for the first network device based on fourth information, the at least one terminal that is to receive the sensing signal; where
the fourth information includes one of the following:
   information about whether a terminal accesses the first network device;
   sensing capability reported by a terminal; and
   other priori information, where the other priori information includes terminal location information.

Optionally, the first sensing requirement is sent by the second network device to the first network device.

Optionally, the first sensing requirement is associated with at least one of the following:
sensing object;
sensing quantity; and
sensing indicator.

Optionally, after the first transmitting module 901 sends the sensing signal to the terminal, the sensing apparatus 900 further includes:
a second receiving module, configured to receive the measurement quantity and the measured value corresponding to the measurement quantity that are sent by the terminal; and
a third execution module, configured to perform a first operation based on the measurement quantity and the measured value corresponding to the measurement quantity; where
the first operation includes one of the following:
   sending the measurement quantity and the measured value corresponding to the measurement quantity to a second network device; and
   determining a sensing result based on the measurement quantity and the measured value corresponding to the measurement quantity, and sending the sensing result to the second network device.

Optionally, after the first transmitting module 901 sends the sensing signal to the terminal, the sensing apparatus 900 further includes:
a third receiving module, configured to receive a sensing result that is for the measured value corresponding to the measurement quantity and that is sent by the terminal; and
a seventh transmitting module, configured to send the sensing result to the second network device.

Optionally, the sensing result includes at least one of the following:
characteristic information of a target object;
related information of a target event; and
related information of a target environment.

Optionally, the configuration information for the sensing signal includes at least one of the following parameters:
waveform of the sensing signal;
subcarrier spacing of the sensing signal;
guard period of the sensing signal;
bandwidth of the sensing signal;
burst (burst) duration of the sensing signal;
time-domain interval of the sensing signal;
transmit signal power of the sensing signal;
signal format of the sensing signal;
signal direction of the sensing signal;
time resource of the sensing signal;
frequency resource of the sensing signal; and
quasi co-location QCL relation of the sensing signal.

Optionally, the measurement quantity includes at least one of the following:
first-type measurement quantity; and
second-type measurement quantity.

The first-type measurement quantity includes at least one of the following:
channel matrix H;
channel state information CSI;
power of each path in a multipath channel;
delay of each path in a multipath channel;
angle information of each path in a multipath channel;
Doppler spread;
Doppler shift;
a phase difference between a sensing signal received by a first antenna and a sensing signal received by a second antenna;
a delay difference between a sensing signal received by the first antenna and a sensing signal received by the second antenna; and
a characteristic difference between an I signal and a Q signal.

The second-type measurement quantity includes at least one of the following:
characteristic information of a target object;
related information of a target event; and
related information of a target environment.

Optionally, the measurement quantity is a measurement quantity for each antenna or a measurement quantity for each sensing resource.

Optionally, the second network device includes a mobility and access management function AMF entity or a sensing function entity.

Optionally, the sensing function entity satisfies at least one of the following:
managing overall coordination and scheduling of resources required by sensing;
calculating a sensing result;
estimating sensing accuracy;
verifying a sensing result;
supporting an immediate sensing request;
supporting a delayed sensing request;
supporting a periodic or event-triggered sensing request;
supporting canceling of a periodic or triggered sensing behavior; and
determining a sensing mode based on second information; where
the second information includes at least one of type of a sensing client, sensing quality of service QoS, sensing capability of the terminal, and sensing capability of the first network device; and
the sensing mode is associated with an entity that receives and sends a sensing signal.

It should be noted that the apparatus embodiments are about an apparatus corresponding to the foregoing method, and all the implementations in the foregoing method embodiments are applicable to the apparatus embodiments, with the same technical effects achieved. Details are not repeated herein.

Optionally, an embodiment of this application further provides a network device. The network device is a first network device, including a processor, a memory, and a program or instructions stored in the memory and capable of running on the processor. When the program or the instructions are executed by the processor, the processes of the foregoing embodiment of the sensing method on the first network device side are implemented, with the same technical effects achieved. To avoid repetition, details are not described herein again.

An embodiment of this application further provides a readable storage medium, where a program or instructions are stored in the computer readable storage medium. When the program or instructions are executed by a processor, the processes of the foregoing embodiment of the sensing method on the first network device side can be implemented, with the same technical effects achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

An embodiment of this application further provides a network device, where the network device is a first network device and includes a processor and a communication interface, where the communication interface is configured to send a sensing signal to a terminal, so that the terminal performs detection on the sensing signal and obtains a measured value corresponding to a measurement quantity for the sensing signal.

The network device embodiments correspond to the foregoing network device method embodiments, and the implementation processes and implementations of the foregoing method embodiments can be applied to the network device embodiments, with the same technical effects achieved.

Specifically, an embodiment of the application further provides a network device, where the network device is a first network device. As shown in FIG. 10, the network device 1000 includes an antenna 1001, a radio frequency apparatus 1002, and a baseband apparatus 1003. The antenna 1001 is connected to the radio frequency apparatus 1002. In an uplink direction, the radio frequency apparatus 1002 receives information by using the antenna 1001, and sends the received information to the baseband apparatus 1003 for processing. In a downlink direction, the baseband apparatus 1003 processes to-be-sent information, and sends the information to the radio frequency apparatus 1002; and the radio frequency apparatus 1002 processes the received information and then sends the information out by using the antenna 1001.

The frequency band processing apparatus may be located in the baseband apparatus 1003. The method performed by the network device in the foregoing embodiments may be implemented in the baseband apparatus 1003, and the baseband apparatus 1003 includes a processor 1004 and a memory 1005.

The baseband apparatus 1003 may include, for example, at least one baseband board, where a plurality of chips are disposed on the baseband board. As shown in FIG. 10, one of the chips, for example, the processor 1004, is connected to the memory 1005, to invoke a program in the memory 1005 to perform the operation of the network device shown in the foregoing method embodiments.

The baseband apparatus 1003 may further include a network interface 1006, configured to exchange information with the radio frequency apparatus 1002, where the interface is, for example, a common public radio interface (common public radio interface, CPRI)

Specifically, the network device in this embodiment of the present invention further includes: an instruction or a program stored in the memory 1005 and capable of running on the processor 1004. The processor 1004 invokes the instruction or program in the memory 1005 to execute the method executed by the modules shown in FIG. 9, with the same technical effects achieved. To avoid repetition, details are not repeated herein.

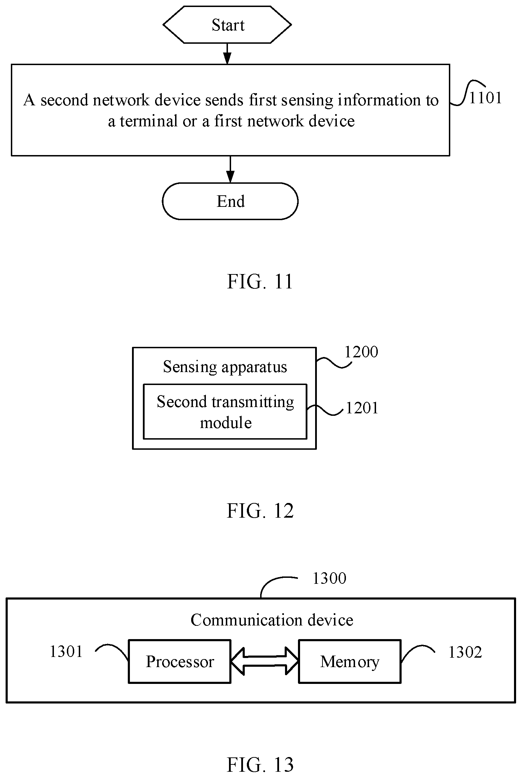

As shown in FIG. 11, an embodiment of this application further provides a sensing method including:

Step 1101: A second network device sends first sensing information to a terminal or a first network device.

The first sensing information includes at least one of a first sensing requirement, configuration information for a sensing signal, and index information of a sensing signal that needs to be measured by the terminal; and
the first network device is a base station.

Optionally, after the sending, by a second network device, first sensing information to a terminal or a first network device, the method further includes:
sending, by the second network device, first indication information to the terminal or the first network device; where
the first indication information is used to indicate a measurement quantity for the sensing signal that needs to be measured by the terminal.

Optionally, in a case that the first sensing information includes the configuration information of the sensing signal, the configuration information of the sensing signal includes: second configuration information of the sensing signal; and
a manner of determining the second configuration information for the sensing signal includes:
determining the second configuration information for the sensing signal based on fifth information; where
the fifth information includes at least one of the following:
   first sensing requirement;
   sensing capability information sent by the first network device;
   sensing capability information sent by the terminal;
   third recommendation information for the configuration information, where the third recommendation information is determined by the first network device based on the first sensing requirement and is sent to the second network device;
   fourth recommendation information for the configuration information, where the fourth recommendation information is determined by the terminal based on the first sensing requirement and is sent to the second network device;
   fifth recommendation information for the configuration information, where the fifth recommendation information is sent by the terminal to the second network device.

Optionally, a manner of obtaining the first sensing requirement includes one of the following:
receiving a first sensing requirement sent by the terminal or a third network device.

Optionally, the first sensing requirement is associated with at least one of the following:
sensing object;
sensing quantity; and
sensing indicator.

Optionally, in a case that the second network device sends the first sensing information to the terminal, the method further includes:
determining, by the second network device based on sixth information, at least one terminal that is to receive the first sensing information; where
the sixth information includes one of the following:
   information indicating whether a terminal accesses the first network device;
   terminal capability reporting information; and
   other priori information, where the other priori information includes terminal location information.

Optionally, after the sending, by a second network device, first indication information to a terminal or a first network device, the method further includes one of the following:
receiving a measurement quantity for a sensing signal and a measured value corresponding to the measurement quantity that are sent by the first network device or the terminal; and
receiving a sensing result that is of the sensing signal and that is sent by the first network device or the terminal.

Optionally, after the receiving a measurement quantity for a sensing signal and a measured value corresponding to the measurement quantity that are sent by the first network device or the terminal, the method further includes:
determining a sensing result based on the measurement quantity and the measured value corresponding to the measurement quantity; and
sending the sensing result to the terminal or a third network device.

Optionally, after the receiving a sensing result that is of the sensing signal and that is sent by the first network device, the method further includes:
sending the sensing result to the terminal or a third network device.

Optionally, the sensing result includes at least one of the following:
characteristic information of a target object;
related information of a target event; and
related information of a target environment.

Optionally, the measurement quantity includes at least one of the following:
first-type measurement quantity; and
second-type measurement quantity.

The first-type measurement quantity includes at least one of the following:
channel matrix H;
channel state information CSI;
power of each path in a multipath channel;
delay of each path in a multipath channel;
angle information of each path in a multipath channel;
Doppler spread;
Doppler shift;
a phase difference between a sensing signal received by a first antenna and a sensing signal received by a second antenna;
a delay difference between a sensing signal received by the first antenna and a sensing signal received by the second antenna; and
a characteristic difference between an I signal and a Q signal.

The second-type measurement quantity includes at least one of the following:
characteristic information of a target object;
related information of a target event; and
related information of a target environment.

Optionally, the measurement quantity is a measurement quantity for each antenna or a measurement quantity for each sensing resource.

Optionally, the configuration information for the sensing signal includes at least one of the following parameters:
waveform of the sensing signal;
subcarrier spacing of the sensing signal;
guard period of the sensing signal;
bandwidth of the sensing signal;
burst (burst) duration of the sensing signal;
time-domain interval of the sensing signal;
transmit signal power of the sensing signal;
signal format of the sensing signal;
signal direction of the sensing signal;
time resource of the sensing signal;
frequency resource of the sensing signal; and
quasi co-location QCL relation of the sensing signal.

Optionally, the second network device includes a mobility and access management function AMF entity or a sensing function entity.

The sensing function entity satisfies at least one of the following:
managing overall coordination and scheduling of resources required by sensing;
calculating a sensing result;
estimating sensing accuracy;
verifying a sensing result;
supporting an immediate sensing request;
supporting a delayed sensing request;
supporting a periodic or event-triggered sensing request;
supporting canceling of a periodic or triggered sensing behavior; and
determining a sensing mode based on second information; where
the second information includes at least one of type of a sensing client, sensing quality of service QoS, sensing capability of the terminal, and sensing capability of the first network device; and
the sensing mode is associated with an entity that receives and sends a sensing signal.

It should be noted that all the descriptions about the second network device in the foregoing embodiment are applicable to the embodiment of the sensing method, with the same technical effects achieved. Details are not repeated herein.

As shown in FIG. 12, an embodiment of this application provides a sensing apparatus 1200, applied to a second network device and including:
a second transmitting module 1201, configured to send first sensing information to a terminal or a first network device; where
the first sensing information includes at least one of a first sensing requirement, configuration information for a sensing signal, and index information of a sensing signal that needs to be measured by the terminal.

Optionally, after the second transmitting module 1201 sends the first sensing information to the terminal or the first network device, the sensing apparatus 1200 further includes:
an eighth transmitting module, configured to send first indication information to a terminal or a first network device; where
the first indication information is used to indicate a measurement quantity for the sensing signal that needs to be measured by the terminal.

Optionally, in a case that the first sensing information includes the configuration information of the sensing signal, the configuration information of the sensing signal includes: second configuration information of the sensing signal; and
a manner of determining the second configuration information for the sensing signal includes:
determining the second configuration information for the sensing signal based on fifth information; where
the fifth information includes at least one of the following:
   first sensing requirement;
   sensing capability information sent by the first network device;
   sensing capability information sent by the terminal;
   third recommendation information for the configuration information, where the third recommendation information is determined by the first network device based on the first sensing requirement and is sent to the second network device;
   fourth recommendation information for the configuration information, where the fourth recommendation information is determined by the terminal based on the first sensing requirement and is sent to the second network device;
   fifth recommendation information for the configuration information, where the fifth recommendation information is sent by the terminal to the second network device.

Optionally, a manner of obtaining the first sensing requirement includes one of the following:
receiving a first sensing requirement sent by the terminal or a third network device.

Optionally, the first sensing requirement is associated with at least one of the following:
sensing object;
sensing quantity; and
sensing indicator.

Optionally, in a case that the second transmitting module 1201 sends the first sensing information to the terminal, the sensing apparatus 1200 further includes:
a sixth determining module, configured to determine, based on sixth information, at least one terminal that is to receive the first sensing information; where
the sixth information includes one of the following:
   information indicating whether a terminal accesses the first network device;
   terminal capability reporting information; and
   other priori information, where the other priori information includes terminal location information.

Optionally, after the eighth transmitting module sends the first indication information to the terminal or the first network device, the sensing apparatus 1200 further includes one of the following:
a fourth receiving module, configured to receive a measurement quantity for a sensing signal and a measured value corresponding to the measurement quantity that are sent by the first network device or the terminal; and
a fifth receiving module, configured to receive a sensing result that is of the sensing signal and that is sent by the first network device or the terminal.

Optionally, after the fourth receiving module receives the measurement quantity for the sensing signal and the measured value corresponding to the measurement quantity that are sent by the first network device or the terminal, the sensing apparatus 1200 further includes:
a seventh determining module, configured to determine a sensing result based on the measurement quantity and the measured value corresponding to the measurement quantity; and
a ninth transmitting module, configured to send the sensing result to the terminal or a third network device.

Optionally, after the fifth receiving module receives the sensing result that is of the sensing signal and that is sent by the first network device, the sensing apparatus 1200 further includes:
a tenth transmitting module, configured to send the sensing result to the terminal or a third network device.

Optionally, the sensing result includes at least one of the following:
characteristic information of a target object;
related information of a target event; and
related information of a target environment.

Optionally, the measurement quantity includes at least one of the following:
first-type measurement quantity; and
second-type measurement quantity.

The first-type measurement quantity includes at least one of the following:
channel matrix H;
channel state information CSI;
power of each path in a multipath channel;
delay of each path in a multipath channel;
angle information of each path in a multipath channel;
Doppler spread;
Doppler shift;
a phase difference between a sensing signal received by a first antenna and a sensing signal received by a second antenna;
a delay difference between a sensing signal received by the first antenna and a sensing signal received by the second antenna; and
a characteristic difference between an I signal and a Q signal.

The second-type measurement quantity includes at least one of the following:
characteristic information of a target object;
related information of a target event; and
related information of a target environment.

Optionally, the measurement quantity is a measurement quantity for each antenna or a measurement quantity for each sensing resource.

Optionally, the configuration information for the sensing signal includes at least one of the following parameters:
waveform of the sensing signal;
subcarrier spacing of the sensing signal;
guard period of the sensing signal;
bandwidth of the sensing signal;
burst (burst) duration of the sensing signal;
time-domain interval of the sensing signal;
transmit signal power of the sensing signal;
signal format of the sensing signal;
signal direction of the sensing signal;
time resource of the sensing signal;
frequency resource of the sensing signal; and
quasi co-location QCL relation of the sensing signal.

Optionally, the second network device includes a mobility and access management function AMF entity or a sensing function entity.

Optionally, the sensing function entity satisfies at least one of the following:
managing overall coordination and scheduling of resources required by sensing;
calculating a sensing result;
estimating sensing accuracy;
verifying a sensing result;
supporting an immediate sensing request;
supporting a delayed sensing request;
supporting a periodic or event-triggered sensing request;
supporting canceling of a periodic or triggered sensing behavior; and
determining a sensing mode based on second information; where
the second information includes at least one of type of a sensing client, sensing quality of service QoS, sensing capability of the terminal, and sensing capability of the first network device; and
the sensing mode is associated with an entity that receives and sends a sensing signal.

It should be noted that the apparatus embodiments are about an apparatus corresponding to the foregoing method, and all the implementations in the foregoing method embodiments are applicable to the apparatus embodiments, with the same technical effects achieved. Details are not repeated herein.

Optionally, an embodiment of this application further provides a network device. The network device is a second network device, including a processor, a memory, and a program or instructions stored in the memory and capable of running on the processor. When the program or the instructions are executed by the processor, the processes of the foregoing embodiment of the sensing method on the second network device side are implemented, with the same technical effects achieved. To avoid repetition, details are not described herein again.

An embodiment of this application further provides a readable storage medium, where a program or instructions are stored in the computer readable storage medium. When the program or instructions are executed by a processor, the processes of the foregoing embodiment of the sensing method on the second network device side can be implemented, with the same technical effects achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

An embodiment of this application further provides a network device, where the network device is a second network device and includes a processor and a communication interface, where the communication interface is configured to send first sensing information to a terminal or a first network device; where
the first sensing information includes at least one of a first sensing requirement, configuration information for a sensing signal, and index information of a sensing signal that needs to be measured by the terminal.

The network device embodiments correspond to the foregoing network device method embodiments, and the implementation processes and implementations of the foregoing method embodiments can be applied to the network device embodiments, with the same technical effects achieved.

Specifically, an embodiment of the application further provides a network device, where the network device is a second network device. Specifically, for the structure of the second network device, reference may be made to the structure of the network device in FIG. 10, and details are not repeated herein.

Specifically, the processor invokes the instructions or program in the memory to execute the method executed by the modules shown in FIG. 12, with the same technical effects achieved. To avoid repetition, details are not repeated herein.

Optionally, as shown in FIG. 13, an embodiment of this application further provides a communications device 1300, including a processor 1301, a memory 1302, and a program or instructions stored in the memory 1302 and capable of running on the processor 1301. For example, when the communications device 1300 is a terminal and when the program or the instructions are executed by the processor 1301, the processes of the foregoing embodiment of the sensing method are implemented, with the same technical effects achieved. When the communications device 1300 is a network device and when the program or the instruction is executed by the processor 1301, the processes of the foregoing embodiment of the sensing method are implemented, with the same technical effects achieved. To avoid repetition, details are not described herein again.

The terminal included in the embodiments of this application may be a device that provides a user with voice and/or data connectivity, a handheld device with a wireless connection function, another processing device connected to a wireless modem, or the like. In different systems, the name of the terminal device may be different, for example, in a 5G system, the terminal device may be referred to as user equipment (User Equipment, UE). A wireless terminal device may communicate with one or more core networks (Core Network, CN) through a radio access network (Radio Access Network, RAN). The wireless terminal device may be a mobile terminal device, such as a mobile phone (or referred to as a "cellular" phone) or a computer with a mobile terminal device. For example, the wireless terminal device may be a portable, pocket-sized, handheld, computer built-in, or in-vehicle mobile apparatus, which exchanges voice and/or data with the radio access network. For example, the wireless terminal may be a device such as a personal communications service (Personal Communication Service, PCS) phone, a cordless telephone set, a session initiation protocol (Session Initiated Protocol, SIP) phone, a wireless local loop (Wireless Local Loop, WLL) station, or a personal digital assistant (Personal Digital Assistant, PDA). The wireless terminal device may also be referred to a system, a subscriber unit (subscriber unit), a subscriber station (subscriber station), a mobile station (mobile station), a mobile (mobile), a remote station (remote station), an access point (access point), a remote terminal (remote terminal), an access terminal device (access terminal), a user terminal device (user terminal), a user agent (user agent), or a user device (user device), which is not limited in the embodiments of this application.

The first network device in the embodiments of this application may be a base station (Base Transceiver Station, BTS) in global system for mobile communications (Global System of Mobile communication, GSM) or code division multiple access (Code Division Multiple Access, CDMA), or may be a base station (NodeB, NB) in wideband code division multiple access (Wideband Code Division Multiple Access, WCDMA), or may be an evolved base station (Evolved Node B, eNB or eNodeB) in LTE, or a relay station or access point, or a base station in the future 5G network, which is limited herein.

Multi input multi output (Multi Input Multi Output, MIMO) transmission may be performed between the first network device and the terminal using one or more antennas each, and the MIMO transmission may be single-user MIMO (Single User MIMO, SU-MIMO) or multi-user MIMO (Multiple User MIMO, MU- MIMO). Depending on the shape and the number of antennas for combination, MIMO transmission may be 2D-MIMO, 3D-MIMO, FD-MIMO, or massive-MIMO, or may be diversity transmission, precoding transmission, or beamforming transmission.

An embodiment of this application further provides a chip, where the chip includes a processor and a communication interface. The communication interface is coupled to the processor, and the processor is configured to run a program or instructions to implement the processes of the foregoing sensing method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of the present invention essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this disclosure.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A sensing method, comprising:
determining, by a terminal, a measurement quantity for a sensing signal; and
performing, by the terminal, detection on the sensing signal and obtaining a measured value corresponding to the measurement quantity; wherein
the sensing signal is sent by a first network device, and the first network device is a base station.

2. The method according to claim 1, wherein the determining, by a terminal, a measurement quantity for a sensing signal comprises at least one of the following:
receiving first indication information sent by the first network device or a second network device, wherein the first indication information is used to indicate a measurement quantity for the sensing signal that needs to be measured by the terminal; and
based on a first sensing requirement, determining the measurement quantity for the sensing signal that needs to be measured by the terminal.

3. The method according to claim 1, before the performing, by the terminal, detection on the sensing signal and obtaining a measured value corresponding to the measurement quantity, further comprising:
determining, by the terminal, configuration information for the sensing signal.

4. The method according to claim 3, wherein the determining, by the terminal, configuration information for the sensing signal comprises at least one of the following:
receiving, by the terminal, first configuration information for the sensing signal, wherein the first configuration information is sent by the first network device;
receiving, by the terminal, second configuration information for the sensing signal, wherein the second configuration information is sent by a second network device; and
determining, by the terminal based on a first sensing requirement, third configuration information for the sensing signal.

5. The method according to claim 3, wherein the determining, by the terminal, configuration information for the sensing signal comprises:
obtaining, by the terminal, configuration information that is for the sensing signal and that is sent by the first network device using broadcast signaling.

6. The method according to claim 3, 4, or 5, wherein the configuration information for the sensing signal comprises at least one of the following parameters:
waveform of the sensing signal;
subcarrier spacing of the sensing signal;
guard period of the sensing signal;
bandwidth of the sensing signal;
burst (burst) duration of the sensing signal;
time-domain interval of the sensing signal;
transmit signal power of the sensing signal;
signal format of the sensing signal;
signal direction of the sensing signal;
time resource of the sensing signal;
frequency resource of the sensing signal; and
quasi co-location QCL relation of the sensing signal.

7. The method according to claim 5, before the obtaining, by the terminal, configuration information that is for the sensing signal and that is sent by the first network device using broadcast signaling, further comprising:
determining, by the terminal based on first information, a to-be-measured sensing signal; wherein
the first information comprises at least one of the following:
a first sensing requirement sent by a second network device; and
index information that is of the sensing signal to be measured by the terminal and that is sent by the second network device.

8. The method according to claim 2, 4, or 7, wherein the first sensing requirement satisfies at least one of the following:
being sent to the terminal by the first network device or the second network device; and
being generated by the terminal;
and/or
the first sensing requirement is associated with at least one of the following:
sensing object;
sensing quantity; and
sensing indicator.

9. The method according to claim 1, after the obtaining a measured value corresponding to the measurement quantity, further comprising any one of the following:
sending, by the terminal, the measurement quantity and the measured value corresponding to the measurement quantity to the first network device or a second network device; and
determining, by the terminal, a sensing result based on the measurement quantity and the measured value corresponding to the measurement quantity.

10. The method according to claim 9, after the sending, by the terminal, the measured value corresponding to the measurement quantity to the first network device or a second network device, further comprising:
receiving, by the terminal, a sensing result from the second network device side.

11. The method according to claim 9, after the determining, by the terminal, a sensing result based on the measurement quantity and the measured value corresponding to the measurement quantity, further comprising:
sending the sensing result to the first network device.

12. The method according to claim 9, 10, or 11, wherein the sensing result comprises at least one of the following:
characteristic information of a target object;
related information of a target event; and
related information of a target environment.

13. The method according to claim 2, 4, 7, 9, or 10, wherein the second network device comprises a mobility and access management function AMF entity or a sensing function entity; wherein
the sensing function entity satisfies at least one of the following:
managing overall coordination and scheduling of resources required by sensing;
calculating a sensing result;
estimating sensing accuracy;
verifying a sensing result;
supporting an immediate sensing request;
supporting a delayed sensing request;
supporting a periodic or event-triggered sensing request;
supporting canceling of a periodic or triggered sensing behavior; and
determining a sensing mode based on second information; wherein
the second information comprises at least one of type of a sensing client, sensing quality of service QoS, sensing capability of the terminal, and sensing capability of the first network device; and
the sensing mode is associated with an entity that receives and sends a sensing signal.

14. The method according to claim 1, wherein the measurement quantity comprises at least one of the following:
first-type measurement quantity; and
second-type measurement quantity; wherein
the first-type measurement quantity comprises at least one of the following:
channel matrix H;
received signal strength indicator RSSI;
reference signal received power RSRP;
channel state information CSI;
power of each path in a multipath channel;
delay of each path in a multipath channel;
angle information of each path in a multipath channel;
Doppler spread;
Doppler shift;
a phase difference between a sensing signal received by a first antenna and a sensing signal received by a second antenna;
a delay difference between a sensing signal received by the first antenna and a sensing signal received by the second antenna; and
a characteristic difference between an I signal and a Q signal; and
the second-type measurement quantity comprises at least one of the following:
characteristic information of a target object;
related information of a target event; and
related information of a target environment.

15. A sensing method, comprising:
sending, by a first network device, a sensing signal to a terminal, so that the terminal performs detection on the sensing signal and obtains a measured value corresponding to a measurement quantity for the sensing signal; wherein
the first network device is a base station.

16. The reporting method according to claim 15, before the sending, by a first network device, a sensing signal to a terminal, further comprising:
sending, by the first network device, first indication information to the terminal, wherein the first indication information is used to indicate a measurement quantity for the sensing signal that needs to be measured by the terminal.

17. The reporting method according to claim 15, before the sending, by a first network device, a sensing signal to a terminal, further comprising:
determining, by the first network device, configuration information for the sensing signal.

18. The method according to claim 17, wherein the determining, by the first network device, configuration information for the sensing signal comprises one of the following:
receiving, by the first network device, second configuration information that is for a sensing signal and that is sent by a second network device; and
determining, by the first network device based on third information, first configuration information for the sensing signal; wherein
the third information comprises at least one of the following:
first sensing requirement;
first recommendation information for the configuration information, wherein the first recommendation information is determined by the second network device based on the first sensing requirement; and
second recommendation information for the configuration information, wherein the second recommendation information is sent by the terminal to the first network device.

19. The method according to claim 18, after the determining, by the first network device, configuration information for the sensing signal, further comprising:
sending, by the first network device, second indication information to the terminal; wherein
the second indication information comprises at least one of the first configuration information for the sensing signal and the first sensing requirement.

20. The method according to claim 17, after the determining, by the first network device, configuration information for the sensing signal, further comprising:
sending, by the first network device, the configuration information for the sensing signal using broadcast signaling.

21. The method according to claim 20, wherein the determining, by the first network device, configuration information for the sensing signal comprises:
determining, by the first network device based on a first sensing requirement, the configuration information for the sensing signal.

22. The method according to claim 15, wherein the sending, by a first network device, a sensing signal to a terminal comprises:
determining, by the first network device, at least one terminal that is to receive the sensing signal; and
sending, by the first network device, the sensing signal to the at least one terminal.

23. The method according to claim 22, wherein the determining, by the first network device, at least one terminal that is to receive the sensing signal comprises:
determining, by the first network device based on fourth information, the at least one terminal that is to receive the sensing signal; wherein
the fourth information comprises one of the following:
information about whether a terminal accesses the first network device;
sensing capability reported by a terminal; and
other priori information, wherein the other priori information comprises terminal location information.

24. The reporting method according to claim 15, after the sending, by a first network device, a sensing signal to a terminal, further comprising:
receiving, by the first network device, the measurement quantity and the measured value corresponding to the measurement quantity that are sent by the terminal; and
performing a first operation based on the measurement quantity and the measured value corresponding to the measurement quantity; wherein
the first operation comprises one of the following:
sending the measurement quantity and the measured value corresponding to the measurement quantity to a second network device; and
determining a sensing result based on the measurement quantity and the measured value corresponding to the measurement quantity, and sending the sensing result to the second network device.

25. The reporting method according to claim 15, after the sending, by a first network device, a sensing signal to a terminal, further comprising:
receiving, by the first network device, a sensing result that is for the measured value corresponding to the measurement quantity and that is sent by the terminal; and
sending the sensing result to the second network device.

26. A sensing method, comprising:
sending, by a second network device, first sensing information to a terminal or a first network device; wherein
the first sensing information comprises at least one of a first sensing requirement, configuration information for a sensing signal, and index information of a sensing signal that needs to be measured by the terminal; and
the first network device is a base station.

27. The reporting method according to claim 26, after the sending, by a second network device, first sensing information to a terminal or a first network device, further comprising:
sending, by the second network device, first indication information to the terminal or the first network device; wherein
the first indication information is used to indicate a measurement quantity for the sensing signal that needs to be measured by the terminal.

28. The method according to claim 26, wherein in a case that the first sensing information comprises the configuration information for the sensing signal, the configuration information for the sensing signal comprises: second configuration information for the sensing signal; and
a manner of determining the second configuration information for the sensing signal comprises:
determining the second configuration information for the sensing signal based on fifth information; wherein
the fifth information comprises at least one of the following:
first sensing requirement;
sensing capability information sent by the first network device;
sensing capability information sent by the terminal;
third recommendation information for the configuration information, wherein the third recommendation information is determined by the first network device based on the first sensing requirement and is sent to the second network device;
fourth recommendation information for the configuration information, wherein the fourth recommendation information is determined by the terminal based on the first sensing requirement and is sent to the second network device;
fifth recommendation information for the configuration information, wherein the fifth recommendation information is sent by the terminal to the second network device.

29. The method according to claim 26, in a case that the second network device sends the first sensing information to the terminal, further comprising:
determining, by the second network device based on sixth information, at least one terminal that is to receive the first sensing information; wherein
the sixth information comprises one of the following:
information indicating whether a terminal accesses the first network device;
terminal capability reporting information; and
other priori information, wherein the other priori information comprises terminal location information.

30. The method according to claim 26, after the sending, by a second network device, first indication information to a terminal or a first network device, further comprising one of the following:
receiving a measurement quantity for a sensing signal and a measured value corresponding to the measurement quantity that are sent by the first network device or the terminal; and
receiving a sensing result that is of the sensing signal and that is sent by the first network device or the terminal.

31. The method according to claim 30, after the receiving a measurement quantity for a sensing signal and a measured value corresponding to the measurement quantity that are sent by the first network device or the terminal, further comprising:
determining a sensing result based on the measurement quantity and the measured value corresponding to the measurement quantity; and
sending the sensing result to the terminal or a third network device.

32. The method according to claim 30, after the receiving a sensing result that is of the sensing signal and that is sent by the first network device, further comprising:
sending the sensing result to the terminal or a third network device.

33. A sensing apparatus, applied to a terminal and comprising:
a first determining module, configured to determine a measurement quantity for a sensing signal; and
a first obtaining module, configured to perform detection on the sensing signal and obtain a measured value corresponding to the measurement quantity; wherein
the sensing signal is sent by a first network device, and the first network device is a base station.

34. A terminal, comprising a processor, a memory, and a program or instructions stored in the memory and capable of running on the processor, wherein when the program or the instructions are executed by the processor, the steps of the sensing method according to any one of claims 1 to 14 are implemented.

35. A sensing apparatus, applied to a first network device, wherein the first network device is a base station, comprising:
a first transmitting module, configured to send a sensing signal to a terminal, so that the terminal performs detection on the sensing signal and obtains a measured value corresponding to a measurement quantity for the sensing signal.

36. A sensing apparatus, applied to a second network device and comprising:
a second transmitting module, configured to send first sensing information to a terminal or a first network device; wherein
the first sensing information comprises at least one of a first sensing requirement, configuration information for a sensing signal, and index information of a sensing signal that needs to be measured by the terminal.

37. A network device, comprising a processor, a memory, and a program or instructions stored in the memory and capable of running on the processor, wherein when the program or instructions are executed by the processor, the steps of the sensing method according to any one of claims 15 to 32 are implemented.

38. A readable storage medium, wherein the readable storage medium stores a program or instructions, and when the program or the instructions are executed by a processor, the steps of the sensing method according to any one of claims 1 to 32 are implemented.
